# EUROPEAN PATENT APPLICATION

(11) **EP 4 832 530 A1**
(43) Date of publication of application: **28.10.2026**
(21) Application number: 23962016.4
(22) Date of filing: 22.12.2023
(51) Int. Cl.: H04W 12/02

(54) **COMMUNICATION METHOD AND DEVICE**

(71) Applicant: GUANGDONG OPPO MOBILE TELECOMMUNICATIONS CORP., LTD., Dongguan, Guangdong 523860 (CN)
(72) Inventor: LI, Meng, Dongguan, Guangdong 523860 (CN); GAN, Lu, Dongguan, Guangdong 523860 (CN)
(74) Representative: Taor, Simon Edward William
(86) International application number: PCT/CN2023/141259
(87) International publication number: WO 2025/129694

(57) **Abstract**

A communication method, a device, a computer-readable storage medium, a computer program product, and a computer program are provided in the disclosure. The method includes the following. Echo signals of multiple sensing signals are received. The multiple sensing signals are generated by multiple sending devices based on multiple phase adjustment parameters and modulation symbols of the multiple sensing signals. The multiple phase adjustment parameters are calculated based on multiple shared parameters. Different shared parameters among the multiple shared parameters are shared between the receiving device and different sending devices.

## Description

### TECHNICAL FIELD

This disclosure relates to the field of communication, and in particular, to a communication method, a device, a computer-readable storage medium, a computer program product, and a computer program.

### BACKGROUND

In the related art, the technology of the third generation partnership project (3GPP) has initiated research on communication services integrated with sensing. Sensing services provided by such an integrated sensing and communication scenario can send sensing signals through a communication device (such as a user equipment (UE), a base station (BS), etc.) and measure echo signals of the sensing signals to track and potentially identify any target (a sensing target) in the environment, which includes people or any object without carrying the UE. However, this may have an impact on personal privacy. Therefore, how to improve security at the level of the sensing signal to prevent the privacy of the sensing target from being compromised has become a problem to be solved.

### SUMMARY

A communication method, a device, a computer-readable storage medium, a computer program product, and a computer program are provided in embodiments of the disclosure.

A communication method performed by a receiving device is provided in embodiments of the disclosure. The method includes the following. Echo signals of multiple sensing signals are received. The multiple sensing signals are generated by multiple sending devices based on multiple phase adjustment parameters and modulation symbols of the multiple sensing signals. The multiple phase adjustment parameters are calculated based on multiple shared parameters. Different shared parameters among the multiple shared parameters are shared between the receiving device and different sending devices.

A communication method performed by a first sending device is provided in embodiments of the disclosure. The method includes the following. A first sensing signal is sent. The first sensing signal is generated based on a first phase adjustment parameter and a modulation symbol corresponding to the first sensing signal. The first phase adjustment parameter is calculated based on a first shared parameter. The first shared parameter is shared between the first sending device and a receiving device.

A receiving device is provided in embodiments of the disclosure. The receiving device includes a first communication unit. The first communication unit is configured to receive echo signals of multiple sensing signals. The multiple sensing signals are generated by multiple sending devices based on multiple phase adjustment parameters and modulation symbols of the multiple sensing signals. The multiple phase adjustment parameters are calculated based on multiple shared parameters. Different shared parameters among the multiple shared parameters are shared between the receiving device and different sending devices.

A first sending device is provided in embodiments of the disclosure. The first sending device includes a second communication unit. The second communication unit is configured to send a first sensing signal. The first sensing signal is generated based on a first phase adjustment parameter and a modulation symbol corresponding to the first sensing signal. The first phase adjustment parameter is calculated based on a first shared parameter. The first shared parameter is shared between the first sending device and a receiving device.

A receiving device is provided in embodiments of the disclosure. The receiving device includes a transceiver, a processor, and a memory. The memory is configured to store computer programs. The processor is configured to invoke and execute the computer programs stored in the memory, to cause the receiving device to perform the aforementioned methods.

A first sending device is provided in embodiments of the disclosure. The first sending device includes a transceiver, a processor, and a memory. The memory is configured to store computer programs. The processor is configured to invoke and execute the computer programs stored in the memory, to cause the first sending device to perform the aforementioned methods.

A chip is provided in embodiments of the disclosure. The chip is configured to implement the aforementioned methods.

Specifically, the chip includes a processor. The processor is configured to invoke and execute computer programs stored in a memory, to cause a device equipped with the chip to perform the aforementioned methods.

A computer-readable storage medium is provided in embodiments of the disclosure. The computer-readable storage medium is configured to store computer programs which, when executed by a device, cause the device to perform the aforementioned methods.

A computer program product is provided in embodiments of the disclosure. The computer program product includes computer program instructions which cause a computer to perform the aforementioned methods.

A computer program is provided in embodiments of the disclosure. The computer program, when executed on a computer, causes the computer to perform the aforementioned methods.

By adopting the above solution, the receiving device and the multiple sending devices calculate respective phase adjustment parameters respectively based on the shared parameters, and perform phase adjustment on respective sensing signals based on the respective phase adjustment parameters for transmission. In this way, the multiple sending devices hide phases of their respective sensing signals synchronously. Only the receiving device that shares the same parameters with each sending device can correctly demodulate the fused echo signals of the multiple sensing signals, so as to obtain an accurate sensing result. Therefore, the privacy of sensing targets can be protected from being compromised at the level of sensing signals, and the sensing security is improved.

### BRIEF DESCRIPTION OF THE DRAWINGS

FIG. 1 is a schematic diagram of an application scenario according to embodiments of the disclosure.
FIG. 2 is a schematic flow chart of a communication method according to an embodiment of the disclosure.
FIG. 3 is a schematic flow chart of a communication method according to another embodiment of the disclosure.
FIG. 4 is a schematic diagram of a multi-base station (multi-BS) cooperative sensing scenario according to an embodiment of the disclosure.
FIG. 5 is a schematic diagram of a multi-user equipment (multi-UE) cooperative sensing scenario according to an embodiment of the disclosure.
FIG. 6 is a schematic diagram of a scenario for calculating a key stream according to an embodiment of the disclosure.
FIG. 7 is a schematic diagram of a scenario for calculating a Hash sequence according to an embodiment of the disclosure.
FIG. 8 is a schematic diagram of a scenario where multiple BSs perform phase adjustment according to an embodiment of the disclosure.
FIG. 9 is a schematic diagram of a scenario where a UE performs phase demodulation according to an embodiment of the disclosure.
FIG. 10 is a schematic flow chart of a communication method applied to a downlink (DL) sensing scenario according to an embodiment of the disclosure.
FIG. 11 is a schematic flow chart of a communication method applied to an uplink (UL) sensing scenario according to an embodiment of the disclosure.
FIG. 12 is a schematic block diagram of a receiving device according to an embodiment of the disclosure.
FIG. 13 is a schematic block diagram of a first sending device according to an embodiment of the disclosure.
FIG. 14 is a schematic block diagram of a communication device according to an embodiment of the disclosure.
FIG. 15 is a schematic block diagram of a chip according to embodiments of the disclosure.
FIG. 16 is a schematic block diagram of a communication system according to embodiments of the disclosure.

### DETAILED DESCRIPTION

The technical solutions of embodiments of the disclosure can be applied to various communication systems, for example, a long term evolution (LTE) system, an advanced LTE (LTE-A) system, a new radio (NR) system, an evolved system of an NR system, a wireless local area network (WLAN), a wireless fidelity (WiFi), or other communication systems, etc.

Embodiments of the disclosure illustrate various embodiments in combination with network devices and terminals. The terminal may be mobile or stationary, and a terminal may also be referred to as a mobile station, a subscriber unit, etc. The terminal may be a station in a WLAN, and may be a terminal such as a smart terminal, a wireless modem, a notebook computer, a tablet computer, etc. In embodiments of the disclosure, the terminal may be a virtual reality (VR) terminal device/an augmented reality (AR) terminal device, a terminal in industrial control, a terminal in self driving, a terminal in remote medicine, a terminal in smart grid, a terminal in transportation safety, a terminal in smart city or a wireless terminal in smart home, etc. By way of explanation and not limitation, in embodiments of the disclosure, the terminal may also be a wearable device.

In embodiments of the disclosure, the network device may be a device that communicates with the terminal, and the network device may be an access point (AP) in the WLAN, an evolved NodeB (eNB or eNodeB) in the LTE system, or a relay station, or an in-vehicle device, a wearable device, a network device (gNB) in an NR network, a network device in a future evolved public land mobile network (PLMN), or a network device in a non-terrestrial network (NTN), etc. By way of explanation and not limitation, in embodiments of the disclosure, the network device may be mobile. For example, the network device may be a mobile device.

It can be understood that the terms "system" and "network" herein are usually used interchangeably throughout the disclosure. The term "and/or" herein only describes an association relationship between associated objects, which means that there can be three relationships. For example, *A* and/or *B* may mean *A* alone, both *A* and *B* exist, and *B* alone. In addition, the character "/" herein generally indicates that the associated objects are in an "or" relationship. It can be understood that the term "indicate" referred to in embodiments of the disclosure may be a direct indication, may be an indirect indication, or may mean that there is an association relationship. For example, *A* indicates *B* may mean that *A* directly indicates *B*, for instance, *B* can be obtained according to *A*; may mean that *A* indirectly indicates *B*, for instance, *A* indicates *C*, and *B* can be obtained according to *C*; or may mean that there is an association relationship between *A* and *B*. In the elaboration of embodiments of the disclosure, the term "correspondence" may mean that there is a direct or indirect correspondence between the two, may mean that there is an association between the two, or may mean a relationship of indicating and indicated or configuring and configured, etc.

In order for better understanding of technical solutions of embodiments of the disclosure, the related art of embodiments of the disclosure are described below. The following related art as an optional scheme can be arbitrarily combined with the technical solutions of embodiments of the disclosure, which shall all fall within the protection scope of embodiments of the disclosure.

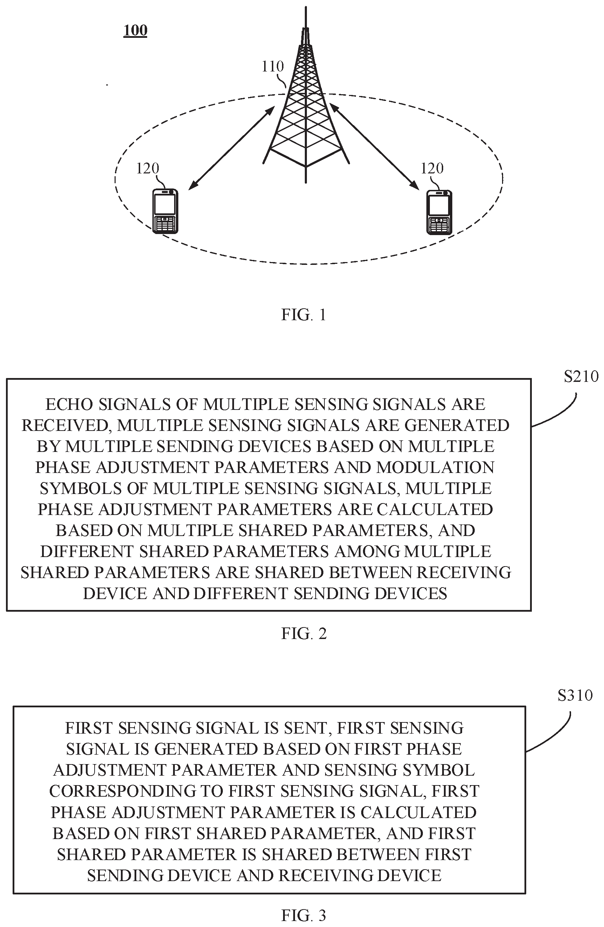

FIG. 1 exemplarily illustrates a communication system 100. The communication system includes one network device 110 and two terminals 120. In a possible implementation, the communication system 100 may include multiple network devices 110, and there can be other quantities of terminals 120 in a coverage area of each of the network devices 110, and embodiments of the disclosure is not limited in this regard. In a possible implementation, the communication system 100 may further include other network entities such as a mobility management entity, an access and mobility management function, etc., and embodiments of the disclosure is not limited in this regard. The network device may also be an access network device and a core network device. That is, the communication system may further include multiple core networks for communicating with the access network device. The access network device may be a base station (BS) of the LTE system, the LTE-A system, or the NR system. Taking the communication system illustrated in FIG. 1 as an example, the communication device may include network devices and terminals with communication functions, and the communication device may also include other devices in the communication system, such as other network entities like a network controller and a mobility management entity, and embodiments of the disclosure is not limited in this regard.

FIG. 2 is a schematic flow chart of a communication method performed by a receiving device according to an embodiment of the disclosure. The method includes at least some of the following.

In S210, echo signals of multiple sensing signals are received. The multiple sensing signals are generated by multiple sending devices based on multiple phase adjustment parameters and modulation symbols of the multiple sensing signals. The multiple phase adjustment parameters are calculated based on multiple shared parameters. Different shared parameters among the multiple shared parameters are shared between the receiving device and different sending devices.

FIG. 3 is a schematic flow chart of a communication method performed by a first sending device according to another embodiment of the disclosure. The method includes at least some of the following.

In S310, a first sensing signal is sent. The first sensing signal is generated based on a first phase adjustment parameter and a sensing symbol corresponding to the first sensing signal. The first phase adjustment parameter is calculated based on a first shared parameter. The first shared parameter is shared between the first sending device and a receiving device.

The scenarios involved in embodiments of the disclosure include multiple sending devices and one receiving device. The multiple sending devices refer to multiple devices that send sensing signals. The receiving device refers to a device that receives echo signals of multiple sensing signals.

The first sending device is any one of the multiple sending devices. The first sensing signal is one of the multiple sensing signals. Different sensing signals among the multiple sensing signals are sent by different sending devices. Time domain ranges for sending the multiple sensing signals are the same.

That is, the first sensing signal sent by the first sending device is any one of the multiple sensing signals. The time domain ranges for sending the multiple sensing signals being the same may refer to at least one of: sending start times of the multiple sensing signals being the same, sending end times of the multiple sensing signals being the same, durations of the multiple sensing signals being the same, or the like.

Signal synchronization needs to be achieved among the multiple sending devices, such as spatial synchronization, time synchronization, etc. Time synchronization may include at least one of: clock synchronization, sampling period being the same, or the like. The synchronization manner for the multiple sending devices may be a default manner, may be stipulated by protocols, or may be synchronized based on a synchronization algorithm. The synchronization algorithm may include at least one of: a sensing synchronization algorithm for multi-radar cooperation, a synchronization algorithm implemented based on the NR, a synchronization algorithm specially designed for a sensing scenario, or the like, which will not be limited or enumerated herein.

The echo signals of the multiple sensing signals may refer to fused echo signals of each sensing signal among the multiple sensing signals being reflected by a sensing target. Specifically, after the multiple sensing signals are reflected by the sensing target (or simply referred to as a target), there may be multiple echo signals. Different echo signals among the multiple echo signals correspond to different sensing signals. The receiving device receives and measures the multiple echo signals. Since the time domain ranges for sending the multiple sensing signals are the same, the multiple echo signals may be received by the receiving device in substantially-the-same time domain ranges, in a completely-the-same time domain range, or in substantially-similar time domain ranges, such that the multiple echo signals received by the receiving device may be referred to as fused echo signals, time-domain fused echo signals, or fused echo signals of multiple sensing signals. In some possible examples, the echo signal may also be referred to as a reflected signal. The various possible names of the echo signal are not limited or enumerated herein.

In a downlink (DL) sensing scenario, the multiple sending devices may be multiple access network devices, and the receiving device may be a terminal. In this scenario, the sensing signal may be referred to as a DL sensing signal.

The access network device may include at least one of: a base station (BS), a gNB, an eNB, a network device in a future evolved PLMN, a network device in an NTN, a satellite, or the like.

The DL sensing signal may also be referred to as a DL sensing reference signal. For example, the DL sensing reference signal may be at least one of a positioning reference signal (PRS), a demodulation - reference signal (DM-RS), a channel state information - reference signal (CSI-RS), or the like. The specific types of all possible DL sensing reference signals are not limited or enumerated herein.

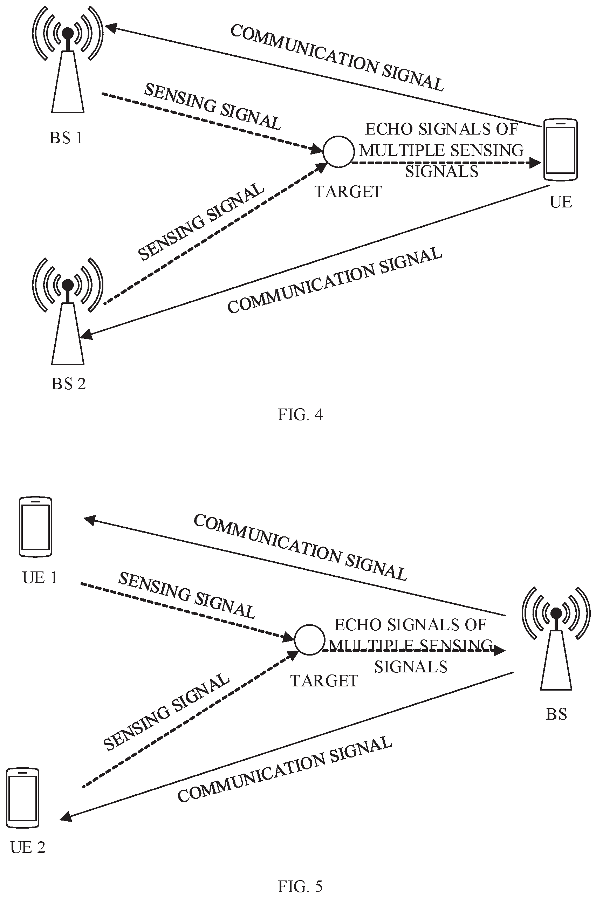

A multi-base station cooperative sensing scenario is exemplarily illustrated with reference to FIG. 4. Multiple base stations (BS 1 and BS 2 illustrated in FIG. 4) each may perform communication signal transmission with a user equipment (UE) (i.e., a terminal). In a DL sensing scenario of multi-base station cooperative sensing, BS 1 and BS 2 may send sensing signals synchronously, and the UE receives and measures echo signals of the multiple sensing signals being reflected by a target (i.e., echo signals of the multiple sensing signals) synchronously.

In an uplink (UL) sensing scenario, the multiple sending devices may be multiple terminals, and the receiving device may be an access network device. In this scenario, the sensing signal may be referred to as an UL sensing signal. The UL sensing signal may also be referred to as an UL sensing reference signal. For example, the UL sensing reference signal may be a sounding reference signal (SRS), or the like. The specific types of all possible UL sensing reference signals are not limited or enumerated herein.

A multi-UE cooperative sensing scenario is exemplarily illustrated with reference to FIG. 5. Multiple UEs (UE1 and UE2 illustrated in FIG. 5 respectively) each may perform communication signal transmission with a base station. In a UL sensing scenario of multi-UE cooperative sensing, UE1 and UE2 may send sensing signals synchronously, and the base station receives and measures echo signals of the multiple sensing signals being reflected by a target synchronously.

In some possible implementations, at the receiving device side, the multiple shared parameters include multiple shared keys, and different shared keys among the multiple shared keys are shared between the receiving device and different sending devices. That is, the receiving device stores a shared key with each sending device. The multiple shared keys are used for the receiving device to calculate multiple phase adjustment parameters. The shared key may also be alternatively referred to as at least one of a sensing key, a key for calculating adjustment parameters, a key for calculating sensing signal-related parameters, a key for calculating adjustment parameters related to sensing signals, or the like. The possible names of the shared key are not limited or enumerated herein.

At the side of multiple sending devices, each sending device stores a shared key with the receiving device. Taking the first sending device as an example, the shared parameter shared between the first sending device and the receiving device is referred to as a first shared parameter. The first shared parameter includes a first shared key. The first shared key is used for the first sending device to calculate a first phase adjustment parameter. The first shared key is a key shared between the receiving device and the first sending device among the multiple shared keys.

Each sending device among the multiple sending devices has a corresponding shared key with the receiving device. A serial number of the shared key is merely for distinguishing and describing different sending devices. For example, the shared key between a second sending device among the multiple sending devices and the receiving device may be referred to as a second shared key, which will not be repeated herein.

Exemplarily, any shared key among the multiple shared keys may be represented as Ksf-*i*, where *i* is a positive integer and may be used to represent the *i*-th sending device. For example, the first shared key between the receiving device and the first sending device may be represented as Ksf-1. For another example, the second shared key between the second sending device and the receiving device may be represented as Ksf-2.

A length of any shared key may be 128 bits, may be more than 128 bits, or may be less than 128 bits, and this embodiment is not limited in this regard.

In some possible embodiments, at the receiving device side, the multiple shared keys are one of: multiple security keys, or being calculated based on the multiple security keys. Different security keys are one of the following between the receiving device and different sending devices: an access stratum (AS) key, an AS security base key, or a physical layer key.

At the side of the multiple sending devices, still taking the first sending device as an example, the first shared key is one of: a first security key being one of: a first AS key, a first AS security base key, or a first physical layer key; or being calculated based on the first security key.

The AS key may include at least one of: a user plane (UP) integrity protection (or verification) key K_{UPint}, a UP encryption key K_{UPenc}, a control plane integrity protection (or verification) key K_{RRCint}, or a control plane encryption key K_{RRCenc}. The derivation manner of each AS key is not limited in this embodiment.

The AS security base key may be K_{gNB}. Exemplarily, K_{gNB} may be initial K_{gNB} stipulated in a related protocol, or may be K_{NG-RAN}. K_{NG-RAN} may also be alternatively represented as K_{NG-RAN*}, or may be alternatively represented as non-initial K_{gNB}. The derivation manner of the AS security base key is not limited in this embodiment.

The physical layer key may be a pairwise key between the sending device and the receiving device. The physical layer key may be generated based on characteristics of a physical layer channel between the sending device and the receiving device. The specific generation manner of the physical layer key is not limited in this embodiment. Exemplarily, the physical layer key may be represented as Kphy.

It can be understood that the above is merely an exemplary illustration of any security key. Any security key may be a next hop (NH) key or another type of key (K) shared between the receiving device and any sending device. All key types of any security key are not limited or enumerated herein.

It can also be understood that the security key is merely a referential elaboration manner rather than a limitation of the names of the above various keys or keys of the above various key types. In fact, the security key may also be replaced with other names, which is not limited or enumerated in this embodiment. Provided that an actual key type of any security key may be any one of the UP integrity protection (or verification) key K_{UPint}, the UP encryption key K_{UPenc}, the control plane integrity protection (or verification) key K_{RRCint}, the control plane encryption key K_{RRCenc}, initial K_{gNB}, K_{NG-RAN}, the NH key, or the physical layer key, it shall fall within the protection scope of this embodiment.

It may be pre-determined by any sending device and the receiving device that, which key (or the key of which key type) among the UP integrity protection (or verification) key K_{UPint}, the UP encryption key K_{UPenc}, the control plane integrity protection (or verification) key K_{RRCint}, the control plane encryption key K_{RRCenc}, initial K_{gNB}, K_{NG-RAN}, the NH key, and the physical layer key, can be taken as the security key by both any sending device and the receiving device.

The manner for both any sending device and the receiving device to determine the security key may be any one of: being defaulted, being stipulated by protocols, being determined by the sending device, being indicated by the receiving device, or the like.

Optionally, the security key used by any sending device and the receiving device may be defaulted or may be stipulated by protocols. The key types of the security keys between the receiving device and different sending devices may be the same or different. For example, both the first sending device and the receiving device may default to use the first K_{NG-RAN} as the first security key; and both the second sending device and the receiving device may take a second physical layer key as a second security key according to protocol stipulations.

Optionally, any sending device may determine the security key with the receiving device; and any sending device may indicate the security key used by both parties to the receiving device.

Taking the first sending device as an example, before sending the first sensing signal, the first sending device may process as follows. The first sending device sends a first security key identifier to the receiving device. The first security key identifier may be an identifier of any key shared between the first sending device and the receiving device, such as a first K_{NG-RAN} identifier, which will not be limited or enumerated herein.

Correspondingly, before receiving the echo signals of the multiple sensing signals, the receiving device may also process as follows. The receiving device receives identifiers of multiple security keys from multiple sending devices, and determines the multiple security keys based on the identifiers of the multiple security keys.

Optionally, the receiving device may determine the security key with any sending device; and the receiving device may indicate the security key used by both parties to any one sending device.

Taking the first sending device as an example, upon determining the multiple security keys and before receiving the echo signals of the multiple sensing signals, the receiving device may also process as follows. The receiving device sends identifiers of multiple security keys to multiple sending devices. Correspondingly, before sending the first sensing signal, the first sending device may also process as follows. The first sending device receives the first security key identifier from the receiving device, and determines the first security key based on the first security key identifier.

It can be understood that the above is merely an exemplary illustration. In actual processing, the manner for mutually determining the security key between the receiving device and different sending devices may be the same or different. For example, the receiving device may determine the first security key with the first sending device, and indicate the first security key used by the first sending device at this time to the first sending device; or the receiving device and the second sending device may use a default second security key, etc. Provided that the receiving device and each sending device determine the security key used by both parties, it shall fall within the protection scope of this embodiment.

In an embodiment, the multiple shared keys may be multiple security keys. That is, multiple sending devices and the receiving device may directly use the security keys as the shared keys.

In an embodiment, at the receiving device side, the multiple shared keys are calculated based on the multiple security keys. At the side of the multiple sending devices, still taking the first sending device as an example, the first shared key is calculated based on the first security key.

A key algorithm for any sending device and the receiving device to calculate the shared key is the same. The key algorithm may be defaulted or may be stipulated by protocols. For example, the key algorithm may include at least one of: a key derivation function (KDF), a first authentication function, a second authentication function, a third key generation function (which may be represented as *f3* for example), a fourth key generation function (which may be represented as *f4* for example), a fifth key generation function (which may be represented as *f5* for example), a Hash algorithm, an advanced encryption standard (AES) algorithm, snow third generation (SNOW 3G) algorithm, a ZUChongzhi (ZUC) algorithm, XOR calculation, or direct connection calculation. The Hash algorithm may include Hash based message authentication code - secure Hash algorithm-256 (HMAC-SHA-256), which may be represented as SHA-256. Other Hash algorithms or Hash functions may also be adopted, which are not enumerated in this embodiment.

Optionally, the receiving device and the first sending device may calculate the first shared key through the following formula: Ksf-1=KDF (K1), where K1 represents the first security key, and Ksf-1 represents the first shared key. The receiving device and the second sending device may calculate the second shared key through the following formula: Ksf-2=KDF (K2), where K2 represents the second security key, and Ksf-2 represents the second shared key.

Optionally, the receiving device and the first sending device may calculate the first shared key as follows. The first shared key is calculated based on the first security key and at least one of: a sensing service indicator, a sensing service identifier, a first sending device identifier, a receiving device identifier, or a random number.

The sensing service indicator may also be referred to as a sensing service type indicator, which may be defaulted by both the first sending device and the receiving device, or may be stipulated by protocols, such as being represented as "sensing".

The sensing service identifier may also be replaced with the sensing service type, and the sensing service identifier may be represented as a sensing service identity (ID).

The random number may be represented as Nonce.

The sensing service identifier and/or the random number may be configured. For example, before the first sending device sends the sensing signal and before the receiving device receives the echo signal, a sensing function (SF) (or a core network device) may configure the sensing service identifier and/or the random number Nonce to the first sending device and the receiving device respectively. It can be understood that the random numbers corresponding to different sending devices may be the same or different. Provided that any sending device and the receiving device use the same random number when calculating the corresponding shared key of both parties, it shall fall within the protection scope of this embodiment.

Exemplarily, the first sending device is gNB1 and the receiving device is a UE, the receiving device and the first sending device may calculate the first shared key through the following formula: Ksf-1=KDF (K1, "Sensing", sensing service ID, UE ID, gNB1 ID, Nonce), where Ksf-1 represents the first shared key, K1 represents the first security key, "Sensing" represents the sensing service indicator, sensing service ID is the sensing service identifier, UE ID is a UE identifier, and gNB1 ID is a gNB1 identifier. Other parameters other than K1 in the formula are optional parameters.

It can be understood that the above is merely an exemplary illustration of the calculation of a common first shared key performed by the first sending device and the receiving device. In actual processing, the manner for each sending device and the receiving device to calculate the common shared key is similar to the above manner of calculating the first shared key, which will not be repeated herein.

In some embodiments, the shared key is calculated by the terminal and the core network device respectively, or the shared key is calculated by the terminal and the SF respectively. At the access network device side, the shared key is configured. For example, the core network device or the SF may configure or send the shared key to the access network device.

In an embodiment, in a DL sensing scenario, at the receiving device (i.e., the terminal) side, the multiple shared keys are calculated based on a first key between the receiving device and a core network device. That is, before receiving the echo signals of the multiple sensing signals, the receiving device may also calculate the multiple shared keys based on the first key.

At the side of the multiple sending devices (i.e., multiple access network devices), the multiple shared keys are configured. Specifically, the core network device or the SF calculates the multiple shared keys based on the first key; and the core network device or the SF sends the corresponding shared key to each sending device among the multiple sending devices (multiple access network devices) respectively.

Taking the first sending device as an example, the first shared key is configured. That is, before the first sending device sends the first sensing signal, the first sending device receives the first shared key. The first shared key may be calculated by the core network device or the SF based on the first key, and the core network device or the SF sends the first shared key to the first sending device.

The core network device may include at least one of: an access and mobility management function (AMF), an authentication server function (AUSF), a security anchor function (SEAF), etc. The AMF and the SEAF may also be co-located.

The key types of the first key may be one of: K_{AMF} shared between the terminal and the AMF, or K_{SEAF} shared between the terminal and the AUSF (the AMF). It can be understood that the above is merely an exemplary illustration. All possible key types of the first key are not limited or enumerated herein.

Optionally, the receiving device calculates the multiple shared keys based on the first key. This may mean that the receiving device calculates the same shared key based on the first key. Correspondingly, the core network device or the SF may also calculate the same shared key based on the first key.

That is, the shared keys used between the receiving device and different sending devices may be the same.

Exemplarily, the receiving device is the terminal, and the terminal and the core network device (or the SF) may calculate the shared key through the following formula: Ksf=KDF (K_{AMF}), where K_{AMF} represents the first key, and Ksf represents the shared key.

For example, the core network device calculates the shared key. The core network device may process as follows. The core network device may receive a message for triggering the sensing service sent by the SF. The message for triggering the sensing service may carry at least one of: the sensing service identifier, an identifier of a node participating in sensing (which may include a terminal identifier and at least one of multiple access network device identifiers), etc. The core network device determines the terminal based on the message for triggering the sensing service, and calculates the shared key based on the first key shared with the terminal. The core network device sends the shared key to multiple access network devices. The shared keys received by different access network devices among the multiple access network devices may be the same.

For example, the SF calculates the shared key. The SF may process as follows. The SF calculates the shared key based on the first key. The SF sends the shared key to multiple access network devices.

The SF may determine the first key as follows. The SF determines the first key according to protocol stipulations or default rules. In this case, the terminal determines the first key based on the protocol stipulations or default manners.

Alternatively, the SF may select a key shared between the terminal and any core network device as the first key. In this case, the SF may also send a first key identifier to the terminal, and correspondingly, the terminal may determine the first key based on the first key identifier.

Optionally, at the receiving device (the terminal) side, the multiple shared keys are calculated based on the first key and multiple first parameters. Different first parameters among the multiple first parameters include identifiers of different sending devices. Correspondingly, the core network device or the SF also calculates the multiple shared keys based on the first key and the multiple first parameters. The core network device or the SF sends the corresponding shared key to each sending device among the multiple sending devices (multiple access network devices).

That is, the shared keys used between the receiving device and different sending devices are different.

Different first parameters may correspond to different sending devices.

Taking the first parameter corresponding to the first sending device as an example, the first parameter corresponding to the first sending device may include the first sending device identifier. Furthermore, the first parameter corresponding to the first sending device may also include at least one of: the sensing service indicator, the sensing service identifier, the receiving device identifier, or the random number.

The relevant elaborations of the sensing service indicator and the sensing service identifier are the same as those in the above embodiments, which will not be repeated herein.

The sensing service identifier and/or the random number may be sent to the receiving device (i.e., the terminal) by the core network device, or may be sent to the receiving device (i.e., the terminal) by the SF, or may be sent to the receiving device (i.e., the terminal) by the first sending device (i.e., the first access network device). It can be understood that the random numbers corresponding to different sending devices may be the same or different.

In an example where the first key is K_{AMF}, the terminal and the core network device (or the SF) may calculate the first shared key corresponding to the first sending device (such as gNB1) through the following formula: Ksf-1=KDF (K_{AMF}, "Sensing", sensing service ID, UE ID, gNB1 ID, Nonce), where UE ID is the terminal identifier, i.e., the receiving device identifier, and gNB1 ID is the first sending device identifier. The meanings of other parameters in the formula are similar to those in the above embodiments, which will not be repeated herein.

The above is merely an exemplary illustration of the calculation of the first shared key corresponding to the first sending device performed by the receiving device (the terminal) and the core network device or the SF. In actual processing, the manner for the receiving device (the terminal) and the core network device or the SF to calculate a shared key corresponding to each sending device is the same as the above manner of calculating the first shared key, which will not be repeated herein.

In this example, the relevant elaboration of the core network device or the SF calculating each shared key and configuring the shared key for each sending device is also similar to that in the above embodiment, which will not be repeated herein.

In an embodiment, in a UL sensing scenario, at the side of the multiple sending devices (multiple terminals), the shared key of each sending device may be calculated based on a second key between the sending device and a core network device.

Taking the first sending device (such as UE1) as an example, the first shared key is calculated based on the second key between the first sending device and the core network device.

At the receiving device (i.e., the access network device) side, the multiple shared keys are configured. Specifically, the core network device or the SF calculates the shared key corresponding to each sending device based on the second key between each sending device and the core network device. The core network device or the SF sends the shared key corresponding to each sending device to the receiving device (the access network device).

The relevant elaboration of the core network device in this embodiment is the same as that in the above embodiments, which will not be repeated herein.

The second key between each sending device and the core network device refers to a key between each terminal and the core network device. In an example where the first sending device is a first terminal, the key type of the second key between the first terminal and the core network device may be one of: K_{AMF-1} shared between the first terminal and the AMF, or K_{SEAF-1} shared between the first terminal and the AUSF (the AMF).

Still taking the first sending device as an example, the calculation of the first shared key performed by the first sending device and the core network device (or the SF) is exemplarily illustrated.

In an example, the first sending device and the core network device (or the SF) may calculate the first shared key through the following formula: Ksf-1=KDF (K_{AMF-1}), where K_{AMF-1} represents the second key, and Ksf-1 represents the first shared key.

In this example, upon calculating the first shared key, the core network device (or the SF) also sends the first shared key corresponding to the first sending device to the receiving device.

In an example, the first sending device and the core network device (or the SF) calculate the first shared key based on the second key and at least one of: the sensing service indicator, the sensing service identifier, the receiving device identifier, the first sending device identifier, or the random number.

The sensing service identifier and/or the random number may be sent to the first sending device by the core network device, or may be sent to the first sending device by the SF, or may be sent to the first sending device by the receiving device (access network device). It can be understood that the random numbers corresponding to different sending devices may be the same or different.

In an example where the second key is K_{SEAF-1}, the first sending device and the core network device (or the SF) may calculate the first shared key corresponding to the first sending device (such as UE1) through the following formula: Ksf-1=KDF (K_{SEAF-1}, "Sensing", sensing service ID, UE1 ID, gNB ID, Nonce), where UE1 ID is the first sending device identifier (such as the first terminal identifier), and gNB ID is the access network device identifier (i.e., the receiving device identifier). The meanings of other parameters in the formula are similar to those in the above embodiments, which will not be repeated herein.

The calculation of the multiple shared keys performed by the core network device (or the SF) and the multiple sending devices is similar to the aforementioned calculation of the first shared key, which will not be repeated herein.

In a UL scenario, the specific manner for the core network device (or the SF) to configure multiple shared keys to the receiving device (i.e., the access network device) is not limited in this embodiment, and shall fall within the protection scope of this embodiment provided that the receiving device obtains the shared key corresponding to each sending device before receiving the echo signals of the multiple sensing signals.

In some embodiments, at the receiving device side, the multiple shared keys are configured. Similarly, at the side of the multiple sending devices, the shared key corresponding to each sending device is also configured. Taking the first sending device as an example, at the first sending device side, the first shared key is configured.

Preferably, before each sending device sends the sensing signal and before the receiving device receives the echo signals of the multiple sensing signals, the SF may generate multiple shared keys, configure the corresponding shared keys to different sending devices among the multiple sending devices respectively, and configure the multiple shared keys and the sending device corresponding to each of the shared keys to the receiving device. The manner for the SF to generate the shared key is not limited in this embodiment, and shall fall within the protection scope of this embodiment, provided that the shared keys used by any sending device and the receiving device are the same in the end. In a possible example, the aforementioned SF may also be replaced with a core network device (other core network devices other than the SF).

In some embodiments, at the receiving device side, the multiple phase adjustment parameters are calculated based on multiple sequences. The multiple sequences are one of: multiple key streams calculated based on the multiple shared keys, multiple Hash sequences calculated based on the multiple shared keys, or multiple random sequences calculated based on the multiple shared keys.

At the side of the multiple sending devices, the phase adjustment parameter corresponding to each sending device is calculated based on a sequence corresponding to the sending device. The sequence corresponding to the sending device is a key stream calculated based on the shared key corresponding to the sending device, a Hash sequence calculated based on the shared key corresponding to the sending device, or a random sequence calculated based on the shared key corresponding to the sending device.

Taking the first sending device as an example, the phase adjustment parameter corresponding to the first sending device is referred to as a first phase adjustment parameter. The first phase adjustment parameter is calculated based on a first sequence. The first sequence is one of: a first key stream calculated based on the first shared key, a first Hash sequence calculated based on the first shared key, or a first random sequence calculated based on the first shared key.

Each phase adjustment parameter among the multiple phase adjustment parameters needs to be calculated by each sending device and the receiving device. Taking the first sending device as an example, the first sending device may calculate its corresponding first phase adjustment parameter before sending the first sensing signal, and the receiving device may calculate the multiple phase adjustment parameters before demodulating the echo signals of the multiple sensing signals.

In an embodiment, at the receiving device side, each sequence among the multiple sequences is a key stream calculated based on each shared key. At each sending device side, the key stream used by each sending device is calculated based on the corresponding shared key. Taking the first sending device as an example, the first sequence is a first key stream calculated based on the first shared key.

At the receiving device side and at the first sending device side, the first sequence may be a first key stream calculated based on the first shared key and at least one of: a count value, bearer-related information, a transmission direction parameter, or a length.

The count value (COUNT) may be the number of times for encryption/decryption operations. For example, the count value is incremented by one each time the first sending device performs one time of encryption/decryption operation. The above count value needs to be transmitted. For example, the first sending device may configure its corresponding count value to the receiving device, or the receiving device may configure the count value corresponding to the first sending device to the first sending device. The configuration manner of the count value is not limited or enumerated in this embodiment, and shall fall within the protection scope of this embodiment, provided that before each sending device sends the sensing signal and before the receiving device receives the echo signals of the multiple sensing signals, the same count value is obtained by both each sending device and the receiving device. The count values corresponding to different sending devices may be the same or different, which is not limited in this embodiment.

The bearer-related information may refer to a bearer ID (a bearer identifier), which may also be referred to as BEARER. The bearer identifiers corresponding to different sending devices may be different.

The transmission direction parameter may be a direction identifier (or may be referred to as a direction flag or DIRECTION) and is used to identify UL or DL.

The length refers to a length of a key stream.

The transmission direction parameter and the length may be defaulted by both the sending device and the receiving device, or may be stipulated by protocols, such that no transmission is required, and the transmission direction parameters and key stream lengths corresponding to different sending devices may be the same.

The algorithm used to calculate the first key stream may be defaulted or may be stipulated by protocols. For example, the algorithm may be represented as an NR encryption algorithm (NEA, or an NR encryption and decryption algorithm). The NEA may be at least one of an AES algorithm, an SNOW 3G algorithm, a ZUC algorithm, etc. Provided that the algorithms used by both the first sending device and the receiving device are the same, it shall fall within the protection scope of this embodiment. The length of the key stream may also be configured according to actual conditions.

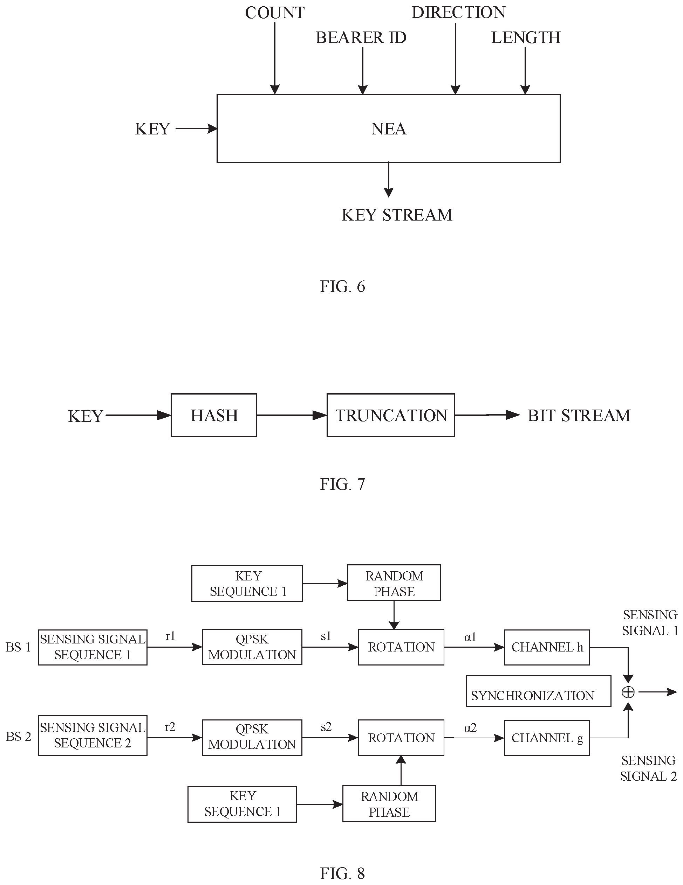

An exemplary illustration is provided with reference to FIG. 6. An input parameter of the NEA includes: a key (KEY), a count value (COUNT), a bearer ID, a direction (i.e., a direction flag or DIRECTION), or a length (LENGTH). The output is a key stream (KEYSTREAM BLOCK). That is, both the receiving device and the first sending device can obtain the same first key stream using the same parameters. KEY may be a 128-bit sensing key Ksf, a length of COUNT may be 32 bits, a length of the bearer ID may be 5 bits, and a length of DIRECTION (a transmission direction parameter) may be 1 bit, for example, DIRECTION can be 0 for the UL and can be 1 for the DL.

The manner for the receiving device to calculate the multiple key streams is the same as the manner for the receiving device to calculate the first key stream, and the manner for each sending device to calculate its own key stream is also the same as the manner for the first sending device to calculate the first key stream, which will not be repeated herein.

In an embodiment, at the receiving device side, each sequence among the multiple sequences is a Hash sequence calculated based on each shared key. At each sending device side, the Hash sequence used by each sending device is calculated based on the corresponding shared key. Taking the first sending device as an example, the first sequence is a first Hash sequence calculated based on the first shared key.

Optionally, at the receiving device side and at the first sending device side, the first sequence may be a first Hash sequence calculated from the first shared key based on the Hash algorithm.

For example, the manner for calculating the first Hash sequence may be represented as: Hash sequence 1=Hash (Key1), where Hash ( ) represents the Hash function, and Key1 represents the first shared key. The Hash function used by the Hash algorithm may be configured according to actual conditions. For example, the Hash function may be SHA-1, or SHA-256, etc. The Hash function is not limited or enumerated herein, and shall fall within the protection scope of this embodiment provided that the Hash functions used by both the sending device and the receiving device are the same.

Optionally, at the receiving device side and at the first sending device side, the first sequence may be a first Hash sequence of a specified length, which is truncated from a first initial Hash sequence. The first initial Hash sequence is calculated from the first shared key based on the Hash algorithm. The relevant elaboration of the Hash algorithm is the same as that in the above examples, which will not be repeated herein.

The specified length may be 128 bits, or may be 256 bits, etc. The specified length is not limited or enumerated herein, and shall fall within the protection scope of this embodiment, provided that the specified lengths used by both the first sending device and the receiving device are the same. For example, the specified length may be defaulted by both parties or may be stipulated by protocols. In addition, the specified lengths used by different sending devices may be the same.

A starting position for truncating a Hash sequence of the specified length may be defaulted by both parties or may be stipulated by protocols. For example, both the receiving device and the first sending device take the first bit as the starting position, etc., and the starting position is not limited or enumerated herein. In addition, the starting positions for truncating the Hash sequence of the specified length used by different sending devices may be the same.

With reference to FIG. 7, the receiving device and the first sending device may process as follows. A key, i.e., a first shared key, is taken as an input. A first initial Hash sequence is calculated through a Hash (i.e., a Hash function). A specified length is then truncated from the first initial Hash sequence to obtain a bit stream (i.e., the first Hash sequence).

The manner for the receiving device to calculate the multiple Hash sequences is the same as the manner for the receiving device to calculate the first Hash sequence, and the manner for each sending device to calculate its own Hash sequence is also the same as the manner for the first sending device to calculate the first Hash sequence, which will not be repeated herein.

In an embodiment, at the receiving device side, each sequence among the multiple sequences is a random sequence calculated based on each shared key. At each sending device side, the random sequence used by each sending device is calculated based on the corresponding shared key. Taking the first sending device as an example, the first sequence is a first random sequence calculated based on the first shared key.

At the receiving device side and at the first sending device side, the first sequence may be a first random sequence calculated from the first shared key based on a pseudo-random number generator (PRNG).

The first random sequence may also be a first pseudo-random sequence, such as sequence *m*, etc.

Exemplarily, at the receiving device side and at the first sending device side, the manner for calculating the first random sequence may be represented as: first random sequence=PRNG (K1), where PRNG ( ) represents a calculation function of the PRNG, and K1 represents the first shared key.

The manner for the receiving device to calculate the multiple random sequences is the same as the manner for the receiving device to calculate the first random sequence, and the manner for each sending device to calculate its own random sequence is also the same as the manner for the first sending device to calculate the first random sequence, which will not be repeated herein.

In some embodiments, at the receiving device side, the multiple phase adjustment parameters are calculated based on multiple sequences. At the side of the multiple sending devices, the phase adjustment parameter of each sending device is calculated based on a sequence generated by the sending device itself. Taking the first sending device as an example, the first phase adjustment parameter is calculated based on the first sequence.

Different phase adjustment parameters among the multiple phase adjustment parameters correspond to different sensing signals.

In an embodiment, taking the first phase adjustment parameter corresponding to the first sensing signal (i.e., generated by the first sending device) as an example, the first phase modulation parameter may include multiple first phase adjustment values. Any phase adjustment value among the multiple first phase adjustment values is calculated based on a first calculation manner and the first sequence. The first sensing signal may include multiple modulation symbols. Each modulation symbol may correspond to one phase adjustment value. That is, the number of phase adjustment values may be equal to the number of modulation symbols.

The phase adjustment parameter may also be alternatively referred to as any one of: a random phase, a rotation phase, a random rotation phase, a random phase offset, a phase offset, or the like.

The multiple modulation symbols of the first sensing signal (i.e., the multiple modulation symbols included in or corresponding to the first sensing signal) are calculated from a first sensing sequence based on a specified modulation manner.

The first sensing sequence for both the receiving device and the first sending device may be the same. The manner for both the receiving device and the first sending device to obtain the same first sensing sequence is not limited in this embodiment. It can be pointed out that the sensing sequences corresponding to different sending devices may be the same or different, which is not limited in this embodiment. The sensing sequence may also be alternatively referred to as any one of a reference signal sequence, a sensing signal sequence, a reference sequence, a gold sequence, or the like. All possible names are not limited or enumerated herein.

The specified modulation manner may be configured according to actual conditions. For example, the specified modulation manner may be a quadrature phase shift keying (QPSK) manner. Provided that both the receiving device and the first sending device use the same specified modulation manner, it shall fall within the protection scope of this embodiment.

The modulation symbol may also be alternatively referred to as a sensing modulation symbol, a sensing symbol, a QPSK modulation symbol, a QPSK symbol, or the like. All possible names are not limited or enumerated in this embodiment.

Optionally, for example, any one of the multiple first phase adjustment values included in the first phase modulation parameter is taken as the *i*-th first phase adjustment value, the *i*-th first phase adjustment value may correspond to the *i*-th modulation symbol of the first sensing signal. The *i*-th first phase adjustment value may be calculated as follows. Multiple bits are truncated from the first part of byte streams in the first sequence for the *i*-th time. The multiple bits truncated for the *i*-th time are calculated based on the first calculation manner to obtain the *i*-th first phase adjustment value, where *i* is an integer greater than or equal to 0.

Multiple bits are truncated from the first part of byte streams in the first sequence for the *i*-th time. This may mean that a specified significant bit of a first byte stream in the first part of byte streams in the first sequence is taken as a start bit, a start significant bit of the bits to be truncated for the *i*-th time is determined, and multiple bits are truncated starting from the start significant bit.

The first part of byte streams in the first sequence may be byte streams composed of all or part of the bits in the first sequence.

The first part of byte streams in the first sequence may be *M* byte streams in the first sequence, where *M* may be a positive integer. The value of *M* may be defaulted by both the receiving device and the first sending device, may be stipulated by protocols, or may be configured. Each byte stream in the *M* byte streams in the first sequence may include 8 consecutive bits in the first sequence, and different byte streams include different bits in the first sequence.

The *M* byte streams in the first sequence may be the first *M* byte streams in the first sequence. Exemplarily, the first *M* byte streams may be the first *M* byte streams starting from the first bit (or the least significant bit) in the first sequence; and the first *M* byte streams may be consecutive byte streams or may be inconsecutive byte streams. For example, the first *M* byte streams may include 8 *M* consecutive bits starting from the first bit (or the least significant bit) in the first sequence. For example, *M* may be equal to 7, and the first part of byte streams in the first sequence may be the first 7 consecutive byte streams in the first sequence.

It can be understood that, regardless of the number of byte streams included in the first part of byte streams, a bit in the first sequence from which the truncation starts, or whether each byte stream in the first part of byte streams is consecutive, provided that both the first sending device and the receiving device determine the first part of byte streams in the first sequence in the same manner, it shall fall within the protection scope of this embodiment, which is not limited or enumerated herein.

The specified significant bit of the first byte stream in the first part of byte streams may be defaulted by both the first sending device and the receiving device, or may be stipulated by protocols, or may be configured. For example, the specified significant bit of the first byte stream in the first part of byte streams may be the most significant bit, may be the least significant bit, or may be another specified significant bit in the first byte stream in the first part of byte streams.

The number of multiple bits truncated from the first part of byte streams in the first sequence for the *i*-th time may be defaulted by both the first sending device and the receiving device, or may be stipulated by protocols, or may be configured. For example, the number of multiple bits truncated from the first part of byte streams in the first sequence for the *i*-th time may be 2, 3, more, or less.

The first calculation manner may be defaulted by both the first sending device and the receiving device, may be stipulated by protocols, or may be configured.

If at least one of the specified significant bit of the first byte stream in the first part of byte streams, the value of *M*, the number of multiple bits, or the first calculation manner is configured, the configuration may be performed by the receiving device for the first sending device, may be performed by the first sending device for the receiving device, or may be performed by the SF or the core network device for both the first sending device and the receiving device. The configuration manner for at least one of the specified significant bit of the first byte stream in the first part of byte streams, the value of *M*, the number of multiple bits, or the first calculation manner is not limited herein.

For example, the first 7 byte streams of Octet0-Octet6 in a 128-bit key stream (the first sequence including 16 byte streams in total) are used to generate the random phase (i.e., the phase adjustment parameter). For instance, if the most significant bit of Octet0 (including 8 bits of B0, B1, B2, B3, B4, B5, B6, and B7) is the specified significant bit of the first byte stream, 2 bits can be sequentially truncated from the most significant bit of Octet0 (generally truncated according to the modulation order), and a phase symbol (the first phase adjustment value) is calculated according to the following first calculation manner: $α = k \times \frac{2 π}{{2}^{2}} = k \times \frac{π}{2}$, where *k* = (2 × *B*₆) + *B*₇. *B₆* and *B₇* represent the values of the 2 bits truncated from Octet0 for the first time, and *α* represents the first phase adjustment value calculated for the first time. Only the generation manner for one first phase adjustment value is illustrated herein as an example. In actual processing, the first phase adjustment value corresponding to each modulation symbol of the first sensing signal can be calculated in a similar manner as above, and the first phase adjustment parameter is eventually formed. There are four optional phases (phase adjustment values): (0, $\frac{π}{2} , \frac{2 π}{2} , \frac{3 π}{2}$).

It can be noted that, to further improve the security of the sensing signal, the number of bits in the key can be freely selected to expand a state space for generation of the random phase. For example, 3 bits can be truncated from the key stream for generation, such that the state space of the random phase corresponding to each carrier of each symbol is expanded to 8.

Taking the first calculation of the first phase adjustment value as an example, the first 7 byte streams of Octet0-Octet6 in the 128-bit key stream (the first sequence including 16 byte streams in total) are used to generate the random phase (i.e., the phase adjustment parameter). For instance, if the most significant bit of Octet0 (including 8 bits of B0, B1, B2, B3, B4, B5, B6, and B7) is the specified significant bit of the first byte stream, 3 bits can be sequentially truncated from the most significant bit of Octet0 (generally truncated according to the modulation order), and the phase symbol (the first phase adjustment value) is calculated according to the following first calculation manner: $α = k \times \frac{2 π}{{2}^{3}}$, where *k* = (2² × *B*₅) + (2 × *B*₆) + *B*₇*. B*₅, *B*₆, and *B*₇ represent the values of the 3 bits truncated from Octet0 for the first time, and *α* represents the first phase adjustment value calculated for the first time.

It can be noted that, in a case where the number of symbols (i.e., the modulation symbols of the first sensing signal) is less, the key stream (the first sequence) may not be fully used; while in a case where the number of symbols (sensing modulation symbols) is large, the key stream (the first sequence) can be valued sequentially as (B0, B1), (B1, B2), (B2, B3) ... For example, multiple bits are sequentially truncated starting from the least significant bit of the first byte stream among the first *M* byte streams of the first sequence to calculate each phase adjustment value.

At the first sending device side, the first sensing signal may be sent as follows. Modulation symbols are obtained based on the first sensing sequence. The first sequence is calculated based on the first shared key. The first phase adjustment parameter is calculated based on the first sequence. The modulation symbols are adjusted based on the first phase adjustment parameter. The first sensing signal is sent.

The sensing modulation symbols are obtained based on the first sensing sequence. This may mean that multiple bits truncated from the first sensing sequence each time are modulated based on the specified modulation manner to obtain each modulation symbol.

In an example where the specified modulation manner is the QPSK manner, the generation manner of each modulation symbol may be as follows. 2 bits are truncated from the first sensing sequence each time. The 2 bits truncated each time by the QPSK manner are modulated to obtain the corresponding sensing modulation symbol. For any sensing modulation symbol being taken as the *m*-th modulation symbol, it can be expressed by the following formula: $r \left(m\right) = \frac{1}{\sqrt{2}} \left(1-2c\left(2m\right)\right) + j \frac{1}{\sqrt{2}} \left(1-2c\left(2m+1\right)\right)$, where *c(2m)* and *c(2m+1)* represent the specific values of the 2 bits truncated from the sensing sequence respectively, and *r(m)* represents the *m*-th modulation symbol.

The first sequence is calculated based on the first shared key and the first phase adjustment parameter is calculated based on the first sequence. This may mean that the first sequence is calculated based on the first shared key, and the first phase adjustment value corresponding to each modulation symbol is calculated based on the first sequence.

The modulation symbols are adjusted based on the first phase adjustment parameter and the first sensing signal is sent as follows. The phase rotation is performed on each sensing modulation symbol based on the first phase adjustment value corresponding to the modulation symbol, so as to obtain each phase-rotated modulation symbol. Each phase-rotated modulation symbol is sent on the sensing resource corresponding to the phase-rotated modulation symbol, where each phase-rotated modulation symbol forms the first sensing signal.

Each phase-rotated modulation symbol may also be processed to obtain the first sensing signal. For example, each phase-rotated modulation symbol can be mapped to the corresponding sensing resource to generate and send the first sensing signal. The first sending device may have multiple sensing resources, where different sensing resources have different time domain ranges and/or frequency domain ranges. The specific positions of the time-frequency resources of the multiple sensing resources may be defaulted or may be stipulated by protocols, which is not limited herein. It can be understood that the above is merely an exemplary illustration. In actual processing, the generation of the sensing signal may further include other related processing, and a timing for processing is not limited to the manner provided in this embodiment, which is not limited or enumerated herein.

The above is an exemplary illustration of the following operations performed by the first sending device: calculating the first phase adjustment parameter, performing phase rotation on the modulation symbols based on the first phase adjustment parameter, and sending the first sensing signal. In actual processing, each sending device performs the operations of calculating its respective phase adjustment parameter, performing phase rotation on the modulation symbols corresponding to its respective sensing signal based on its respective phase adjustment parameter, and sending the sensing signal. The specific processing manner of each sending device is the same as that of the first sending device, which will not be repeated herein.

It can also be noted that synchronization is required among multiple sending devices. The relevant elaboration of the synchronization is the same as that in the above embodiments, which will not be repeated herein.

An exemplary illustration of the processing of multiple sending devices is provided with reference to FIG. 8. For example, the multiple sending devices include two base stations (BS1 and BS2), and the two base stations perform phase adjustment on the modulation symbols corresponding to their respective sensing signals respectively. BS1 and BS2 perform QPSK modulation based on their respective reference signal sequences to obtain modulation symbols. The reference signal sequences corresponding to different base stations may be the same or different, which are illustrated as reference signal sequence 1 and reference signal sequence 2 respectively in FIG. 8 for distinction. Correspondingly, the bits used by BS1 and BS2 for QPSK modulation are denoted as *r1* and *r2* respectively. BS1 and BS2 modulate the modulation symbols respectively to obtain QPSK modulation symbols (denoted as *s1* and *s2* for example). BS1 and BS2 calculate random phases respectively based on their respective key sequences (the aforementioned multiple sequences, denoted as key sequence 1 and key sequence 2 in FIG. 8). BS1 and BS2 add the random phases *α1* and *α2* respectively to the modulation symbols of *s · e^{jα}*₁ and *s · e*^{*jα*2} , where s represents a modulation symbol. *s* = *e*^{*jβπ*/4}, *β* = ±1, ±3 , where *β* represents a phase of the sensing modulation symbol. BS1 and BS2 send their respective sensing signals 1 and sensing signals 2 on their respective channels (e.g., channel *h* and channel *g*) respectively. During the process where BS1 and BS2 send their respective sensing signals 1 and sensing signals 2 on their respective channels (e.g., channel *h* and channel *g*) respectively, there may further be other processes, such as resource mapping, etc. The timing and specific processing manner of other related processes are not limited or enumerated in this example. In some possible examples, BS1 and BS2 perform QPSK mapping (resource mapping) respectively to generate their respective sensing signals, and BS1 and BS2 send their respective sensing signals 1 and sensing signals 2 on their respective channels (e.g., channel *h* and channel *g*) synchronously. *s* may refer to any modulation symbol. For example, each s may be calculated in the manner mentioned in the above embodiments: $r \left(m\right) = \frac{1}{\sqrt{2}} \left(1-2c\left(2m\right)\right) + j \frac{1}{\sqrt{2}} \left(1-2c\left(2m+1\right)\right.$ . The random phase *α* corresponds to the modulation symbol. The specific processing manner of each modulation symbol is the same, which will not be repeated herein.

At the receiving device side, upon receiving the echo signals of the multiple sensing signals, the receiving device may process as follows. A sensing result is obtained based on the multiple phase adjustment parameters and the echo signals of the multiple sensing signals.

Specifically, obtaining the sensing result based on the multiple phase adjustment parameters and the echo signals of the multiple sensing signals may include: demodulating the echo signals of the multiple sensing signals based on each phase adjustment parameter among the multiple phase adjustment parameters and a modulation symbol of each sensing signal, to obtain a channel estimate between each sending device and the receiving device; and obtaining the sensing result based on the channel estimate between each sending device and the receiving device.

The echo signals of the multiple sensing signals are demodulated based on each phase adjustment parameter among the multiple phase adjustment parameters and the modulation symbol of each sensing signal, to obtain a channel estimate between each sending device and the receiving device as follows.

In a case where an echo signal of the *k*-th sensing signal is demodulated for the *k*-th time and *k* is equal to 1, the echo signal of current-remaining sensing signal is demodulated based on the *k*-th phase adjustment parameter, so as to obtain the *k*-th demodulated echo signal. When *k* is equal to 1, the echo signals of the current-remaining sensing signals may be the echo signals of all sensing signals. Channel estimation is performed based on the modulation symbol of the *k*-th sensing signal and the *k*-th demodulated echo signal, to obtain a channel estimate between the *k*-th sending device and the receiving device.

In a case where the echo signal of the *k*-th sensing signal is demodulated for the *k*-th time and *k* is greater than 1, based on *k*-1 channel estimates between the first *k*-1 sending devices and the receiving device and the modulation symbols of the first *k*-1 sensing signals, echo signals of the first *k*-1 sensing signals are eliminated from the echo signals of the multiple sensing signals to obtain the echo signals of the current-remaining sensing signals. The echo signals of the current-remaining sensing signals are demodulated based on the *k*-th phase adjustment parameter to obtain the *k*-th demodulated echo signal. Channel estimation is performed based on the modulation symbol of the *k*-th sensing signal and the *k*-th demodulated echo signal, to obtain a channel estimate between the *k*-th sending device and the receiving device. *k* is a positive integer less than or equal to the number of multiple sending devices.

The above processing cycle is continued until *k* equals to the number of the multiple sending devices, so as to obtain the channel estimates between all the sending devices and the receiving device respectively.

The echo signals of the current-remaining sensing signals are demodulated based on the *k*-th phase adjustment parameter, to obtain the *k*-th demodulated echo signal. This may mean that phase demodulation is performed on the echo signal on each sensing resource corresponding to each modulation symbol of the *k*-th sensing signal, based on each phase adjustment value included in the *k*-th phase adjustment parameter, to obtain the *k*-th phase-rotated echo signal (also referred to as the echo signal of the *k*-th symbol after phase rotation or the echo signal of a rotated *k*-th symbol).

It can be noted that the above processing may further include related processes such as demapping of the echo signals. All possible related processes of demodulating the echo signals are not limited or enumerated herein.

The manner for the receiving device to calculate the modulation symbol of each sensing signal is the same as that for each sending device to calculate the modulation symbol of its respective sensing signal, which will not be repeated herein.

The sensing result is obtained based on the channel estimate between each sending device and the receiving device. This may mean that a sensing measurement value required for the sensing service is calculated based on a sensing algorithm and the channel estimate between each sending device and the receiving device, and the calculated sensing measurement value is taken as the sensing result. The specific manner for generating or calculating the sensing result is not limited or enumerated herein.

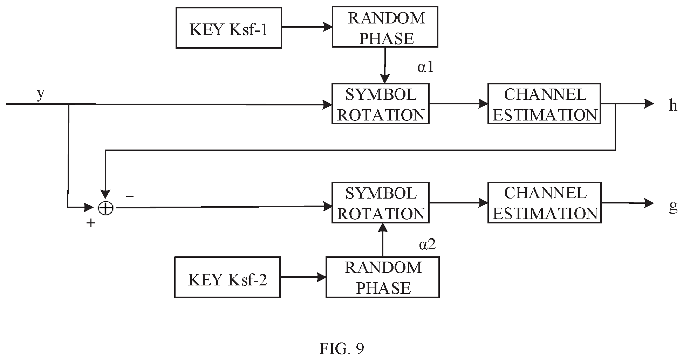

An exemplary illustration of the processing of the receiving device is provided with reference to FIG. 9. For example, the receiving device is a UE and performs phase demodulation on the echo signals of 2 sensing signals.

The UE receives the fused sensing echo signals (i.e., the echo signals of the multiple sensing signals) reflected by the sensing target synchronously. The echo signals are expressed as: *y* = *hs* · *e*^{*jα*1} *+ gs* ·*e*^{*jα*2} + *n*, where *y* represents the echo signals of the multiple sensing signals, *h* and g represent the sensing channels corresponding to the 2 sensing signals respectively, and *n* represents noise.

The UE generates random phase *α̂*₁ based on Ksf-1. *α̂*₁ is theoretically the same as random phase *α1* generated by the first sending device (e.g., gNB1). Therefore, random phase *α̂*₁ generated by the UE is directly denoted as *α1* herein.

The UE demodulates *y* based on *α1* to obtain *ŷ*₁, which can be expressed as: *ŷ*₁ = *ye*^{*-jα*1} = *hs* + *gs · e*^{*j*(*α*2*-α*1)} *+ ne*^{- *jα*1}, where *ŷ*₁ represents a first demodulated echo signal or an echo signal of a rotated first symbol, and *e*^{-*jα*1} represents performing phase rotation on *y.*

The UE performs QPSK modulation based on a known sensing sequence (e.g., the sensing sequence of the sensing signal corresponding to the first sending device) to generate OFDM modulation symbol *s*, and performs channel estimation based on *s* and the first demodulated echo signal, to obtain channel estimate *h* between the UE and the first sending device (e.g., gNB1).

The UE generates random phase *α̂*₂ based on Ksf-2. *α̂*₂ is theoretically the same as random phase *α2* generated by the second sending device (e.g., gNB2). Therefore, random phase *α̂*₂ generated by the UE is directly denoted as *α2* herein.

The UE demodulates the echo signals of the current-remaining sensing signals based on *α2* to obtain the second demodulated echo signal, which can be expressed as: *ŷ*₂ *=* (*y*-*hse*^{*jα*1})*e*^{*-jα*2} = *gs + ne*^{-*jα*2}*,* where (*y*-*hse*^{*jα*1}) represents that, based on one channel estimate between the first sending device and the receiving device and the modulation symbol of the first sensing signal, the echo signal of the first sensing signal is eliminated from the echo signals of the multiple sensing signals to obtain the echo signals of the current-remaining sensing signals; and *ŷ*₂ represents the first demodulated echo signal or the echo signal of the rotated first symbol, and *e*^{-*jα*2} represents performing phase rotation on the echo signals of the current-remaining sensing signals.

The UE performs QPSK modulation based on a known sensing sequence (e.g., the sensing sequence of the sensing signal corresponding to the second sending device) to generate OFDM modulation symbols *s*, and performs channel estimation based on s and the second demodulated echo signal to obtain channel estimate g between the UE and the second sending device (e.g., gNB2).

Eventually, the UE stores the acquired CSI (which may include each channel estimate for example), and obtains the sensing result.

The demodulation of the echo signals performed by the UE may also include related processes such as demapping. The specific timing and manner of the demapping are not limited in this example. In addition, all possible processing of demodulating the echo signals are not limited or enumerated in this embodiment, and shall fall within the protection scope of this embodiment provided that any processing of demodulating the echo signals includes the processing in the above example.

In some possible implementations, at the receiving device side, the multiple shared parameters include multiple sequence generation parameters. Different sequence generation parameters among the multiple sequence generation parameters are shared between different sending devices and the receiving device.

The multiple phase adjustment parameters are calculated based on multiple sequences, and the multiple sequences are calculated based on the multiple sequence generation parameters.

At the side of the multiple sending devices, taking the first sending device as an example, the first shared parameter includes a first sequence generation parameter. The first phase adjustment parameter is calculated based on a first sequence. The first sequence is calculated based on the first sequence generation parameter. The first sequence generation parameter is one of the multiple sequence generation parameters. The sequence generation parameters used or stored by different sending devices may be the same or different, which is not limited in this embodiment.

The multiple sequences (or any sequence) may refer to chaotic sequences, such as noise-like chaotic sequences. A chaotic phenomenon is a deterministic random-like process occurring in a nonlinear dynamic system, which is neither periodic nor convergent (chaotic sequences can be used to solve the problems of predictability and periodicity of the pseudo-random sequence, such that the security performance is improved), and is extremely sensitive to an initial value. A chaotic sequence is one of the products of the chaotic phenomenon. Based on the characteristics of the chaotic phenomenon, the chaotic sequence has characteristics as follows. A small change in initial conditions can lead to vastly different results, such that the behavior of the system is unpredictable and is similar to noise, which greatly enhances the confidentiality of information. In addition, since a chaotic dynamic system is a deterministic system, the exact same random sequence can be reproduced using the same initial value. Based on this characteristic, the chaotic sequence can be used to generate a rotation phase. In embodiments of the disclosure, the noise-like chaotic sequence is mainly generated by manners such as Tent mapping, Cubic mapping, and Logistic mapping. All possible generation manners of the chaotic sequence are not limited or enumerated herein.

Each sequence generation parameter among the multiple sequence generation parameters may include at least one of: an initial chaotic value of each sequence, a control parameter of each sequence, or the maximum index value of each sequence. The initial chaotic value of each sequence is an initial value for calculating each sequence. The control parameter of each sequence may be an adjustment value of each sequence. The value range of the control parameter may be configured according to actual conditions, such as greater than 0 and less than 1, greater than or equal to 0 and less than or equal to 1, or greater than or equal to -1 and less than or equal to 1, which is not limited or enumerated herein. The maximum index value of each sequence may indicates a length of each sequence or the number of values of each sequence. Furthermore, the maximum index value of each sequence may be equal to the number of the modulation symbols of the corresponding sensing signal.

The content included in the first sequence generation parameter is the same as that of each aforementioned sequence generation parameter, which will not be repeated herein.

The multiple sequence generation parameters may be pre-configured for the receiving device, or may be stipulated by protocols. Alternatively, each sequence generation parameter among the multiple sequence generation parameters may be determined by each sending device and indicated to the receiving device. Alternatively, the multiple sequence generation parameters may be determined by the receiving device, and each sequence generation parameter is configured for the corresponding sending device respectively. Alternatively, the multiple sequence generation parameters may be configured for each sending device and the receiving device by the core network device or the SF respectively. Provided that the corresponding sequence generation parameters stored in each sending device and the receiving device are the same, it shall fall within the protection scope of this embodiment.

Taking the first sequence generation parameter as an example, both the first sending device and the receiving device calculate the first sequence in the same manner as follows. In a case where values of the first sequence are calculated for the first time, the first value in the first sequence is calculated using an initial chaotic value of the first sequence based on a second calculation manner (or the first value in the first sequence is calculated using the initial chaotic value of the first sequence and a control parameter of the first sequence based on the second calculation mode). The number of values included in the first sequence is determined whether to reach the maximum index value of the first sequence. If not, a current value in the first sequence is calculated using a previous value in the first sequence based on the second calculation manner (or the current value in the first sequence is calculated using the previous value in the first sequence and the control parameter of the first sequence based on the second calculation manner). If yes, the calculation is stopped, and the first sequence is obtained.

Exemplarily, the first sequence is calculated based on the second calculation manner, which can be specifically expressed as: ${x}_{n + 1} = 1 - 2 {x}_{n}^{2} , {x}_{n} ∈ \left[-1,+1\right]$, where *n* is a positive integer, *xₙ* is the previous value in the first sequence, the specific value range of *xₙ* may be greater than or equal to -1 and less than or equal to 1, and *x*_{*n*+1} is the current value in the first sequence.

Taking the first sequence as an example, the first sequence is used to calculate the first phase adjustment parameter. At the first sending device side and at the receiving device side, the first phase adjustment parameters are calculated in the same manner as follows. The *a*-th value is truncated from the first sequence. The *a*-th value is calculated based on a third calculation manner to obtain the *a*-th first phase adjustment value in the first phase adjustment parameter. *α* is an integer greater than or equal to 0 and less than or equal to the maximum index value. For example, for the above chaotic sequence (the first sequence) generated in an interval of [-1,1], the third calculation manner can be expressed as: *α = x*_{*α* ·} *π* , where *α* is the *a*-th first phase adjustment value, and *xₐ* is the *a*-th value in the first sequence.

It can be understood that different sending devices may calculate different sequences by using different sequence generation parameters and different calculation manners. Taking the second sequence among the multiple sequences as an example, for instance, the second sequence is calculated by the second sending device among the multiple sending devices, and the receiving device and the second sending device calculate the second sequence in the same manner as follows. In a case where the values of the second sequence are calculated for the first time, the first value in the second sequence is calculated using an initial chaotic value of the second sequence based on a fourth calculation manner (or the first value in the second sequence is calculated using the initial chaotic value of the second sequence and a control parameter of the second sequence based on the fourth calculation manner). The number of values included in the second sequence is determined whether to reach the maximum index value of the second sequence. If not, a current value in the second sequence is calculated using a previous value in the second sequence based on the fourth calculation manner (or the current value in the second sequence is calculated using the previous value in the second sequence and the control parameter of the second sequence based on the fourth calculation manner). If yes, the calculation is stopped, and the second sequence is obtained.

Exemplarily, the second sequence is calculated based on the fourth calculation manner, which can be specifically expressed as: ${z}_{k + 1} = \left\{\begin{matrix}{z}_{k} / β , {z}_{k} ∈ \left(0, β\right] \\ \left(1-{z}_{k}\right) / \left(1-β\right) , {z}_{k} ∈ \left(β, 1\right]\end{matrix}\right.$, where *k* is a positive integer, *zₖ* is the previous value in the second sequence (which may be the initial chaotic value), *β* represents the control parameter of the second sequence, and *z*_{*k*+1} is the current value in the second sequence. The specific value range of *zₖ* may be greater than 0 and less than or equal to 1. In a case where *zₖ* is less than or equal to *β* and greater than 0, *z*_{*k*+1} is calculated through *zₖ* / *β*. In a case where *zₖ* is greater than *β* and less than or equal to 1, *z*_{*k*+1} is calculated through (1 *- zₖ*) / (1 -*β*).

Taking the second sequence as an example, the second sequence is used to calculate the second phase adjustment parameter. At the second sending device side and at the receiving device side, the second phase adjustment parameters are calculated in the same manner as follows. The *a*-th value is truncated from the second sequence. The *a*-th value is calculated based on a fifth calculation manner to obtain the *a*-th second phase adjustment value in the second phase adjustment parameter. *a* is an integer greater than or equal to 0 and less than or equal to the maximum index value. For example, for the above chaotic sequence (the second sequence) generated in an interval of [0,1], the fifth calculation manner can be expressed as: *α = xₐ* · 2*π,* where *α* is the *a*-th second phase adjustment value, and *xₐ* is the *a*-th value in the second sequence.

The above are merely two kinds of exemplary illustrations. In actual processing, there may be more possibilities for the sequence generation parameters and calculation manners used by each sending device among the multiple sending devices to calculate their respective sequences, which will not be enumerated herein. The values in the sequences adopted in the above examples are non-integers, which results in an infinite optional value space and high security for the eventually-generated phase adjustment parameters.

Optionally, the above multiple sequences may also quantize discrete values into 0 or 1 through a threshold, such that a series of discrete values are converted into multiple binary sequences, and can then be processed in the aforementioned manner in which the phase adjustment parameter is calculated based on the key stream (or the Hash sequence or the random sequence), which will not be repeated.

In this embodiment, each sending device processes and sends its respective sensing signal based on its respective phase adjustment parameter in the same manner as that in the above embodiments, and the receiving device demodulates the received echo signals of the multiple sensing signals based on each phase adjustment parameter in the same manner as that in the above embodiments, which will not be repeated herein.

In some possible implementations, upon obtaining the sensing result, the receiving device may also report the sensing result.

The receiving device reporting the sensing result may be one of: sending the sensing result to a core network device, or sending the sensing result to the SF.

For example, the receiving device is the terminal, and the terminal measures the echo signals of the sensing signals triggered by a sensing control request sent by the SF; correspondingly, the terminal may directly report the sensing result to the SF. Alternatively, the terminal measures the echo signals of the sensing signals triggered by a message sent by the core network device; correspondingly, the terminal may report the sensing result to the core network device (the core network device may report the sensing result to the SF), and the sensing result may be carried in a non-access stratum (NAS) message. Alternatively, the terminal measures the echo signals of the sensing signals triggered by a message sent by the access network device; correspondingly, the terminal may report the sensing result to the access network device, and the sensing result may be carried in an access stratum (AS) message.

For example, the receiving device is the access network device, and the access network device measures the echo signals of the sensing signals triggered by the sensing control request sent by the SF; correspondingly, the access network device may directly report the sensing result to the SF. Alternatively, the access network device measures the echo signals of the sensing signals triggered by the message sent by the core network device; correspondingly, the access network device may report the sensing result to the core network device.

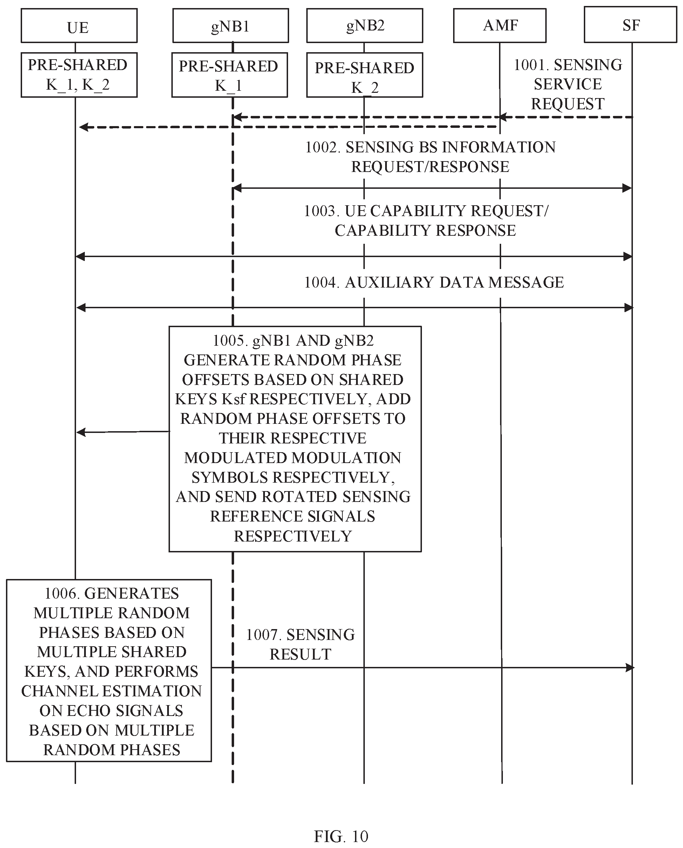

An exemplary illustration of a multi-base station cooperative sensing scenario is provided with reference to FIG. 10. For the scenario illustrated in FIG. 10, multiple BSs (such as a serving gNB and neighboring gNBs illustrated in FIG. 10) send a QPSK-modulated sensing reference signal (which may also be the DM-RS, the CSI-RS, the PRS, etc.), and the UE receives and measures the multiple echo signals reflected by the sensing target synchronously (the fused multiple QPSK signals can solve an amplitude leakage caused by the application of random phase bias). To ensure the security of the sensing signals, each BS generates a random phase based on a shared key K (i.e., the shared key) and adds phase rotation to the signal to-be-sent. The receiving UE generates the same random phase based on the shared key K, then performs channel estimation on the received echo signals, and stores the acquired CSI. An illegal eavesdropper cannot perform CSI measurement according to the received signals without knowing the shared key K. The specific process is as illustrated in FIG. 10 and includes the following.

Multiple base stations (gNB1 and gNB2) and the UE share the same key (denoted as K_1 and K_2) with each other. In one manner, the key shared by the UE with each gNB may be a security key such as K_{gNB} in the above embodiments, or may be a key derived based on K_{gNB} corresponding to the UE and each gNB (such as the AS key, etc.). In another manner, each key may also be a new key shared by each gNB with the UE respectively. gNB1 and gNB2 may be a serving base station and a neighboring base station corresponding to the UE respectively. In addition, other gNBs other than gNB1 and gNB2 may be included, and only two gNBs are illustrated in FIG. 10 for brevity, which does not limit the DL sensing scenario.

In Step 1001, the SF sends a sensing service request to each gNB (e.g., gNB1 and gNB2) and the UE through the AMF. Step 1001 may be replaced with the following: the SF sends the sensing service request directly to each gNB (and the UE) without passing through the AMF, in which case the shared key is not derived based on the key K_{amf}. Alternatively, Step 1001 may also be replaced with the following: the UE (which may be a third-party client UE) or an anchor function (AF) triggers the sensing service request, which is not enumerated herein.

The sensing service request may carry at least one of: a service type ID (such as the ID of the sensing service and/or the type ID of the sensing service), a service requirement (such as sensing resolution, sensing accuracy, frame rate, duration, target area information, time delay, information of a node participating in sensing (e.g., the UE identifier and the gNB identifier)), etc.

In Step 1002, the SF sends a sensing BS information request to the gNB, and obtains a sensing BS information response returned by the gNB.

The sensing BS information request (and/or response) may be used to acquire information of multiple base stations required for multi-base station cooperative sensing.

The sensing BS information request and/or response may be exchanged between the SF and the serving base station of the UE (e.g., gNB1). Alternatively, the sensing BS information request/response may be exchanged between the SF and each base station (gNB1 and gNB2) respectively, which is not limited herein.

The sensing BS information request/response may be used for interaction to obtain at least one of: a physical cell identifier (PCI), a global cellular identity (GCI), an absolute radio frequency channel number (ARFCN) and a transmission and receiving point (TRP) identifier, timing information of the TRP served by the gNB, down link - positioning reference signal (DL-PRS) configuration for the TRP served by the gNB, synchronization signal and physical broadcast channel (PBCH) block (SSB) information (time/frequency occupied by the SSB) of the TRP, spatial direction information of a DL-PRS resource of the TRP served by the gNB, geographic coordinate information of the DL-PRS resource of the TRP served by the gNB, a TRP type, on-demand DL-PRS information, or information associated with a TRP transmitter (Tx) timing error group (TEG).

In Step 1003, the SF sends a capability request to the UE, and obtains a capability response reported by the UE. Through the interaction of capability request/capability response of the UE, the UE may send a sensing capability to the SF, such that the SF determines a sensing node UE and related configurations.

The sensing capability of the UE may include the following contents: a supported sensing mode being a transmitting and receiving capability in a UE1-transmit-and-UE2-receive mode, a receiving capability in a gNB-transmit-and-UE-receive mode, or a transmitting capability in a UE-transmit-and-gNB-receive mode; a supported terminal role being a sensing sending terminal, a sensing receiving terminal, or a sensing management terminal; and at least one of the following in each supported sensing mode: a sensing accuracy, a sensing distance, a distance resolution, a sensing speed, a speed resolution, a sensing angle, an angle resolution, or sensing time delay, etc.

It can be noted that if the SF is co-located with the LMF, related protocols (such as an LTE positioning protocol (LPP)) are reused for capability interaction (or reporting). All possible manners for capability interaction between the SF and the UE are not limited or enumerated herein.

In Step 1004, the SF sends an auxiliary data message to the UE. The auxiliary data message includes any auxiliary data required for the UE to perform necessary DL sensing reference signal measurement. The auxiliary data includes but is not limited to at least one of: indication information of a time domain resource, a frequency domain resource, and a space domain resource of the reference signal, a reference signal sending node ID, a random phase generation manner (an initial value, an index, ...), or the like.

It can be noted that if the SF is co-located with the LMF, related protocols (such as the LPP protocol) are reused for sending the auxiliary data message. All possible manners for interacting the auxiliary data message between the SF and the UE are not limited or enumerated herein.

In Step 1005, gNB1 and gNB2 generate random phase offsets *α1* and *α2* based on the shared keys Ksf (e.g., Ksf1 and Ksf2) respectively. The random phase offsets are added to their respective modulated modulation symbols to obtain *s · e*^{*jα*1} and *s* · *e*^{*iα*2} respectively, and the rotated sensing reference signals are sent respectively. The specific processing manner of this step is the same as that in the above embodiments, which will not be repeated herein. gNB1 and gNB2 obtains the shared keys Ksf respectively in this step in the same manner as that in the above embodiments, which will not be repeated herein.

In Step 1006, based on the time synchronization in Step 1001, the UE receives fused sensing echo signals reflected by a sensing target synchronously, generates multiple random phases based on multiple shared keys, and performs channel estimation on the echo signals based on the multiple random phases to obtain a CSI. The specific processing of this step is the same as that in the above embodiments, which will not be repeated.

In Step 1007, the UE calculates a sensing measurement value required for the sensing service based on a sensing algorithm and a channel estimate between each sending device and the receiving device, takes the calculated sensing measurement value as the sensing result, and sends the sensing result to the SF.

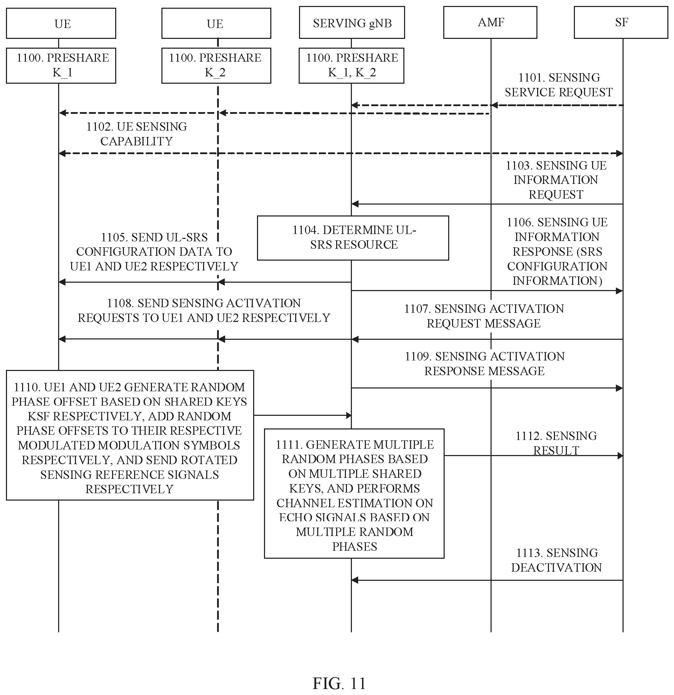

An exemplary illustration of a multi-UE cooperative sensing scenario is provided with reference to FIG. 11. For the scenario illustrated in FIG. 11, multiple UEs (such as UE1 and UE2 illustrated in FIG. 11) send a sensing reference signal (such as an SRS), and a serving gNB receives and measures the multiple echo signals reflected by the sensing target synchronously. The specific process is as illustrated in FIG. 11 and includes the following.

In Step 1100, UE1 and UE2 share keys of K_1 and K_2 with the serving gNB respectively. In one manner, the key shared by each UE with the serving gNB may be a security key such as K_{gNB} in the above embodiments, or may be a key derived based on K_{gNB} of each UE and the gNB (such as the AS key, etc.). In another manner, each key may also be a new key shared by each UE with the gNB.

In Step 1101, the SF sends a sensing service request to each UE (e.g., UE1 and UE2) and the serving gNB through the AMF. Step 1101 may be replaced with the following: the SF sends the sensing service request directly to each UE and the serving gNB without passing through the AMF, in which case the shared key is not derived based on the key K_{amf}. Alternatively, Step 1101 may also be replaced with the following: the UE (which may be a third-party client UE) or an AF triggers the sensing service request, which is not enumerated herein. The content carried in the sensing service request is the same as that in Step 1001 in the above embodiments, which will not be repeated herein.

In Step 1102, the UE sends a sensing capability of the UE to the SF, such that the SF determines a sensing node UE and related configurations.

The sensing capability of the UE may include the following contents: a supported sensing mode being transmitting and receiving capability in a UE1-transmit-and-UE2-receive mode, a receiving capability in a gNB-transmit-and-UE-receive mode, or a transmitting capability in a UE-transmit-and-gNB-receive mode; a supported terminal role being a sensing sending terminal, a sensing receiving terminal, or a sensing management terminal; a supported sensing accuracy; a UE wireless-related capability such as a bandwidth supporting signal reception/transmission, a processing capability, or the like; and a supported beam scanning function, etc.

It can be noted that if the SF is co-located with the LMF, related protocols (such as an LPP protocol) are reused for capability interaction (or reporting). All possible manners for capability interaction between the SF and the UE are not limited or enumerated herein.

In Step 1103, the SF sends a sensing UE information request to the serving gNB, and the serving gNB obtains SRS information of multiple UEs required for multi-UE cooperative sensing.

After this step, the sensing UE information request includes but is not limited to at least one of: a requested quantity/duration for UL-SRS transmission, a resource type (a periodic resource, a semi-persistent resource, a aperiodic resource), a bandwidth, a requested SRS resource set and the number of SRS resource in each SRS resource set, a path loss reference (at least one of a PCI, an SSB index, a DL-PRS identifier, a DL-PRS resource set identifier, a DL-PRS resource identifier, etc.), spatial relation information (at least one of the PCI, the SSB index, the DL-PRS identifier, the DL-PRS resource set identifier, the DL-PRS resource identifier, a non-zero power (NZP) CSI-RS resource identifier, an SRS resource identifier, a positioning SRS resource identifier, etc.), a periodicity of SRS in each SRS resource set, SSB information, or a carrier frequency of an SRS transmission bandwidth.

In Step 1104, the serving gNB determines a UL-SRS resource available for UE1 and UE2 according to the UE capability.

In Step 1105, the serving gNB sends UL-SRS configuration data to UE1 and UE2 respectively. The configuration data corresponding to each UE includes, in addition to the reference signal transmission mode (periodic transmission, semi-persistent transmission, aperiodic transmission) and SRS time-frequency-space resource information, a random phase generation manner (an initial value, an index, ...).

In Step 1106, the serving gNB sends a sensing UE information response message to the SF, and provides SRS configuration information for the UE.

In Step 1107, in a case of semi-persistent SRS or aperiodic SRS, the SF requests to activate UE SRS transmission by sending a sensing (or positioning) activation request message to the serving gNB of the UEs (UE1 and UE2).

In Step 1108, the serving gNB sends sensing activation requests to UE1 and UE2 respectively to activate or trigger UE1 and UE2 to send the SRS.

In Step 1109, the serving gNB sends a sensing (or positioning) activation response message to the SF.

In Step 1110, UE1 and UE2 generate random phase offsets *α1* and *α2* based on the shared keys Ksf (e.g., Ksf1 and Ksf2) respectively. The random phase offsets are added to their respective modulated modulation symbols respectively to obtain *s·e*^{*jα*1} and *s·e*^{*jα*2} respectively, and the rotated sensing reference signals are sent respectively. The specific processing manner of this step is the same as that in the above embodiments, which will not be repeated herein. UE1 and UE2 obtains the shared keys Ksf respectively in this step in the same manner as that in the above embodiments, which will not be repeated herein.

In Step 1111, based on the time synchronization in Step 1101, the serving gNB receives fused sensing echo signals reflected by a sensing target synchronously, generates multiple random phases based on multiple shared keys, and performs channel estimation on the echo signals based on the multiple random phases to obtain a CSI. The specific processing of this step is the same as that in the above embodiments, which will not be repeated herein.

In Step 1112, the gNB calculates a sensing measurement value required for the sensing service based on a sensing algorithm and a channel estimate between each sending device and the receiving device, takes the calculated sensing measurement value as the sensing result, and sends the sensing result to the SF.

In Step 1113, the SF sends a sensing deactivation message of the UEs to the serving gNB.

By adopting the solution provided in embodiments of the disclosure, the receiving device and the multiple sending devices calculate respective phase adjustment parameters respectively based on the shared parameters, and perform phase adjustment on respective sensing signals based on the respective phase adjustment parameters for transmission. In this way, the multiple sending devices hide phases of their respective sensing signals synchronously. Only the receiving device that shares the same parameters with each sending device can correctly demodulate the fused echo signals of the multiple sensing signals, so as to obtain an accurate sensing result. Therefore, the privacy of sensing targets can be protected from being compromised at the level of sensing signals, and the sensing security is improved.

Specifically, a multi-station cooperative sensing solution is provided in the disclosure. Through which not only the sensing measurement accuracy can be improved, but also the sensing privacy information can be protected at the signal level, as follows. In the provided multi-station cooperative sensing solution, the receiving terminal can fuse multi-station sensing signals through a related algorithm, share sensing data to a sensing center, reduce the sensing blind area, realize continuous tracking of the target, and achieve accurate sensing of the sensing target. The sensing superposed QPSK signals sent by multiple stations can hide both a phase and an amplitude synchronously. An eavesdropper cannot obtain the sensing result without a shared sequence (since the eavesdropper does not know the rotation phases of the two paths of signals, even if the eavesdropper obtains an amplitude of the first demodulated signal, the eavesdropper cannot obtain an amplitude of the second demodulated signal, such that the final sensing result cannot be obtained). The number of sending terminals is expandable from two stations to multiple stations. When the number of sending terminals is presented as being more, the sensing accuracy is higher and the security performance is better.

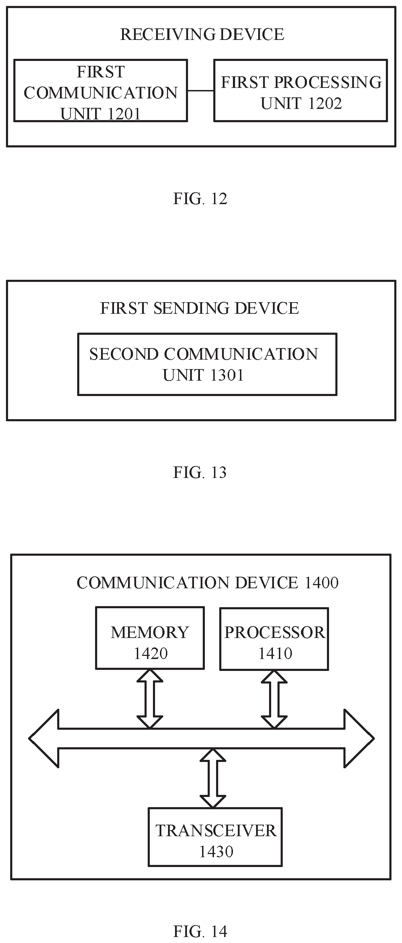

FIG. 12 is a schematic diagram of a composition structure of a receiving device according to an embodiment of the disclosure. The receiving device includes a first communication unit 1201. The first communication unit 1201 is configured to receive echo signals of multiple sensing signals. The multiple sensing signals are generated by multiple sending devices based on multiple phase adjustment parameters and modulation symbols of the multiple sensing signals. The multiple phase adjustment parameters are calculated based on multiple shared parameters. Different shared parameters among the multiple shared parameters are shared between the receiving device and different sending devices.

As illustrated in FIG. 12, the receiving device further includes a first processing unit 1202. The first processing unit 1202 is configured to obtain a sensing result based on the multiple phase adjustment parameters and the echo signals of the multiple sensing signals.

The first processing unit is configured to demodulate the echo signals of the multiple sensing signals based on each phase adjustment parameter among the multiple phase adjustment parameters and the modulation symbol of each sensing signal, to obtain a channel estimate between each sending device and the receiving device. The first processing unit is configured to obtain the sensing result based on the channel estimate between each sending device and the receiving device.

The multiple shared parameters include multiple shared keys. Different shared keys among the multiple shared keys are shared between the receiving device and different sending devices.

The multiple phase adjustment parameters are calculated based on multiple sequences. The multiple sequences are one of: multiple key streams calculated based on the multiple shared keys, multiple Hash sequences calculated based on the multiple shared keys, or multiple random sequences calculated based on the multiple shared keys.

The multiple shared keys are one of: multiple security keys, or being calculated based on the multiple security keys. Different security keys are one of the following between the receiving device and different sending devices: an AS key, an AS security base key, or a physical layer key.

The multiple shared keys are calculated based on a first key between the receiving device and a core network device.

The multiple shared keys are calculated based on the first key and multiple first parameters. Different first parameters among the multiple first parameters include identifiers of different sending devices.

The multiple shared keys are configured.

The multiple shared parameters include multiple sequence generation parameters. Different sequence generation parameters among the multiple sequence generation parameters are shared between different sending devices and the receiving device.

The multiple phase adjustment parameters are calculated based on multiple sequences. The multiple sequences are calculated based on the multiple sequence generation parameters.

The multiple sending devices are multiple access network devices. The receiving device is a terminal.

The multiple sending devices are multiple terminals. The receiving device is an access network device.

FIG. 13 is a schematic diagram of a composition structure of a first sending device according to an embodiment of the disclosure. The first sending device includes a second communication unit 1301. The second communication unit 1301 is configured to send a first sensing signal. The first sensing signal is generated based on a first phase adjustment parameter and a modulation symbol corresponding to the first sensing signal. The first phase adjustment parameter is calculated based on a first shared parameter. The first shared parameter is shared between the first sending device and a receiving device.

The first sensing signal is one of multiple sensing signals. Different sensing signals among the multiple sensing signals are sent by different sending devices. Time domain ranges for sending the multiple sensing signals are the same.

The first shared parameter includes a first shared key.

The first phase adjustment parameter is calculated based on a first sequence. The first sequence is one of: a first key stream calculated based on the first shared key, a first Hash sequence calculated based on the first shared key, or a first random sequence calculated based on the first shared key.

The first shared key is one of: a first security key being one of: a first AS key, a first AS security base key, or a first physical layer key; or being calculated based on the first security key.

The first shared key is calculated based on a second key between the first sending device and a core network device.

The first shared key is configured.

The first shared parameter incudes a first sequence generation parameter.

The first phase adjustment parameter is calculated based on a first sequence. The first sequence is calculated based on the first sequence generation parameter.

The multiple sending devices are multiple access network devices. The receiving device is a terminal.

The multiple sending devices are multiple terminals. The receiving device is an access network device.

The device in embodiments of the disclosure can implement corresponding functions of each device in the aforementioned communication method embodiments. For the procedure, function, implementation, and advantage corresponding to each module (sub-module, unit, assembly, etc.) in the device, reference may be made to the corresponding illustrations in the above method embodiments, which will not be described in detail again herein. It can be noted that the functions of various modules (sub-modules, units, assemblies, etc.) in the device described in embodiments of the disclosure may be implemented by different modules (sub-modules, units, assemblies, etc.), or may be implemented by the same module (sub-module, unit, assembly, etc.).

FIG. 14 is a schematic structural diagram of a communication device 1400 according to an embodiment of the disclosure. The communication device 1400 includes a processor 1410. processor 1410 can invoke and execute computer programs stored in a memory, to cause the communication device 1400 to perform the methods in embodiments of the disclosure.

In a possible implementation, the communication device 1400 may further include a memory 1420. The processor 1410 can invoke and execute computer programs stored in the memory 1420, to cause the communication device 1400 to perform the methods in embodiments of the disclosure. The memory 1420 may be a separate device independent of the processor 1410, or may be integrated into the processor 1410. In a possible implementation, the communication device 1400 may further include a transceiver 1430. The processor 1410 can control the transceiver 1430 to communicate with other devices, specifically, to send information or data to other devices, or to receive information or data sent by other devices. The transceiver 1430 may include a transmitter and a receiver. The transceiver 1430 may further include an antenna, where one or more antennas may be provided.

A receiving device is provided in embodiments of the disclosure. The receiving device includes a processor, and a memory in communication with the processor. The memory is configured to store instructions which, when executed by the processor, cause the receiving device to perform the operation of receiving echo signals of multiple sensing signals. The multiple sensing signals are generated by multiple sending devices based on multiple phase adjustment parameters and modulation symbols of the multiple sensing signals. The multiple phase adjustment parameters are calculated based on multiple shared parameters. Different shared parameters among the multiple shared parameters are shared between the receiving device and different sending devices.

A first sending device is provided in embodiments of the disclosure. The first sending device includes a processor and a memory in communication with the processor. The memory is configured to store instructions which, when executed by the processor, cause the first sending device to perform the operation of sending a first sensing signal. The first sensing signal is generated based on a first phase adjustment parameter and a modulation symbol corresponding to the first sensing signal. The first phase adjustment parameter is calculated based on a first shared parameter. The first shared parameter is shared between the first sending device and the receiving device.

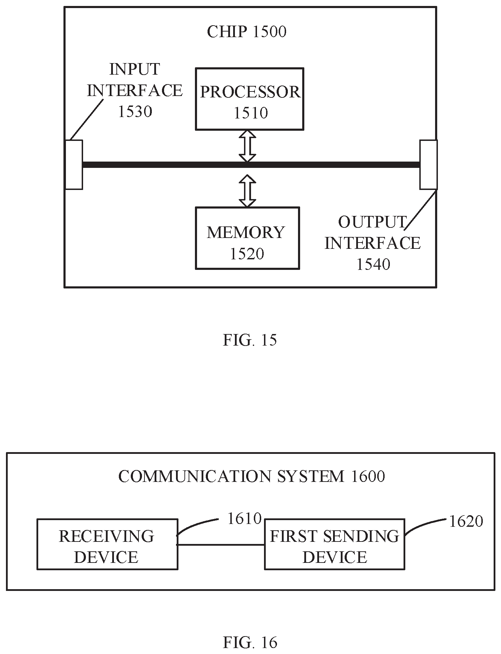

FIG. 15 is a schematic structural diagram of a chip 1500 according to an embodiment of the disclosure. The chip 1500 includes a processor 1510. The processor 1510 can invoke and execute computer programs stored in a memory to implement the methods in embodiments of the disclosure. In a possible implementation, the chip 1500 may further include a memory 1520. The processor 1510 can invoke and execute computer programs stored in the memory 1520 to implement the methods performed by each device in embodiments of the disclosure. The memory 1520 may be a separate device independent of the processor 1510, or may be integrated into the processor 1510. In a possible implementation, the chip 1500 may further include an input interface 1530. The processor 1510 can control the input interface 1530 to communicate with other devices or chips, specifically, to obtain information or data sent by other devices or chips. In a possible implementation, the chip 1500 may further include an output interface 1540. The processor 1510 can control the output interface 1540 to communicate with other devices or chips, specifically, to output information or data to other devices or chips. In a possible implementation, the chip can be applied to various devices in embodiments of the disclosure, and the chip can implement the corresponding procedures performed by various devices in each method of embodiments of the disclosure, which is not repeated herein for brevity. It can be understood that the chip mentioned in embodiments of the disclosure may also be referred to as a system-on-chip (SOC), etc.

The aforementioned processor may be a general-purpose processor, a digital signal processor (DSP), a field programmable gate array (FPGA), an application-specific integrated circuit (ASIC), or other programmable logic devices, transistor logic devices, discrete hardware components, etc. The aforementioned general-purpose processor may be a microprocessor, or may be any conventional processor, or the like. The aforementioned memory may be a volatile memory or a non-volatile memory, or may include both the volatile memory and the non-volatile memory.

It can be understood that the above memory is by way of example but not limitation. For example, the memory in embodiments of the disclosure may also be static random access memory (SRAM), dynamic random access memory (DRAM), etc.

FIG. 16 is a schematic block diagram of a communication system 1600 according to an embodiment of the disclosure. The communication system 1600 includes a receiving device 1610 and a first sending device 1620. All or some of the devices in the above embodiments can be implemented through software, hardware, firmware, or any other combination thereof. When implemented by software, all or part of the functions can be implemented in the form of a computer program product. The computer program product includes one or more computer instructions. When the computer instructions are applied and executed on a computer, all or part of the operations or functions of the embodiments of the disclosure are performed. The computer can be a general-purpose computer, a special-purpose computer, a computer network, or other programmable apparatuses. The computer instruction can be stored in a computer-readable storage medium, or transmitted from one computer-readable storage medium to another computer-readable storage medium. For example, the computer instruction can be transmitted from one website, computer, server, or data center to another website, computer, server, or data center in a wired manner or in a wireless manner. Examples of the wired manner can be a coaxial cable, an optical fiber, a digital subscriber line (DSL), etc. The wireless manner can be, for example, infrared, wireless, microwave, etc. The computer readable storage medium can be any computer accessible usable-medium or a data storage device such as a server, a data center, or the like which is integrated with one or more usable media. The usable medium can be a magnetic medium (such as a hard disc), or a semiconductor medium (such as a solid state disk (SSD)), etc.

It can be understood that in various embodiments of the disclosure, the magnitude of a sequence number of each process does not mean an order of execution, and the order of execution of each process should be determined by its function and an internal logic and shall not constitute any limitation to the implementation of the embodiments of the disclosure.

It will be evident to those skilled in the art that, for the sake of convenience and brevity, in terms of the specific working processes of the foregoing systems, apparatuses, and units, reference can be made to the corresponding processes in the foregoing method embodiments, which will not be described in detail again herein.

The foregoing elaborations are merely implementations of the disclosure, but are not intended to limit the protection scope of the disclosure. Any variation or replacement easily thought of by those skilled in the art within the technical scope disclosed in the disclosure shall belong to the protection scope of the disclosure. Therefore, the protection scope of the disclosure shall be subject to the protection scope of the claims.

## Claims

1. A communication method performed by a receiving device, comprising:
receiving echo signals of a plurality of sensing signals, wherein the plurality of sensing signals are generated by a plurality of sending devices based on a plurality of phase adjustment parameters and modulation symbols of the plurality of sensing signals, the plurality of phase adjustment parameters are calculated based on a plurality of shared parameters, and different shared parameters among the plurality of shared parameters are shared between the receiving device and different sending devices.

2. The method of claim 1, further comprising:
obtaining a sensing result based on the plurality of phase adjustment parameters and the echo signals of the plurality of sensing signals.

3. The method of claim 2, wherein obtaining the sensing result based on the plurality of phase adjustment parameters and the echo signals of the plurality of sensing signals comprises:
demodulating the echo signals of the plurality of sensing signals based on each phase adjustment parameter among the plurality of phase adjustment parameters and a modulation symbol of each sensing signal, to obtain a channel estimate between each sending device and the receiving device; and
obtaining the sensing result based on the channel estimate between each sending device and the receiving device.

4. The method of any one of claims 1 to 3, wherein the plurality of shared parameters comprise a plurality of shared keys, and different shared keys among the plurality of shared keys are shared between the receiving device and different sending devices.

5. The method of claim 4, wherein the plurality of phase adjustment parameters are calculated based on a plurality of sequences, and the plurality of sequences are one of: a plurality of key streams calculated based on the plurality of shared keys; a plurality of Hash sequences calculated based on the plurality of shared keys; or a plurality of random sequences calculated based on the plurality of shared keys.

6. The method of claim 4 or 5, wherein the plurality of shared keys are one of:
a plurality of security keys, wherein different security keys are one of the following between the receiving device and different sending devices: an access stratum (AS) key, an AS security base key, or a physical layer key; or
being calculated based on the plurality of security keys.

7. The method of claim 4 or 5, wherein the plurality of shared keys are calculated based on a first key between the receiving device and a core network device.

8. The method of claim 7, wherein the plurality of shared keys are calculated based on the first key and a plurality of first parameters, and different first parameters among the plurality of first parameters comprise identifiers of different sending devices.

9. The method of claim 4 or 5, wherein the plurality of shared keys are configured.

10. The method of any one of claims 1 to 3, wherein the plurality of shared parameters comprise a plurality of sequence generation parameters, and different sequence generation parameters among the plurality of sequence generation parameters are shared between different sending devices and the receiving device.

11. The method of claim 10, wherein the plurality of phase adjustment parameters are calculated based on a plurality of sequences, and the plurality of sequences are calculated based on the plurality of sequence generation parameters.

12. The method of any one of claims 1 to 11, wherein the plurality of sending devices are a plurality of access network devices, and the receiving device is a terminal.

13. The method of any one of claims 1 to 6, 9 to 11, wherein the plurality of sending devices are a plurality of terminals, and the receiving device is an access network device.

14. A communication method performed by a first sending device, comprising:
sending a first sensing signal, wherein the first sensing signal is generated based on a first phase adjustment parameter and a modulation symbol corresponding to the first sensing signal, the first phase adjustment parameter is calculated based on a first shared parameter, and the first shared parameter is shared between the first sending device and a receiving device.

15. The method of claim 14, wherein the first sensing signal is one of a plurality of sensing signals, different sensing signals among the plurality of sensing signals are sent by different sending devices, and time domain ranges for sending the plurality of sensing signals are the same.

16. The method of claim 14 or 15, wherein the first shared parameter comprises a first shared key.

17. The method of claim 16, wherein the first phase adjustment parameter is calculated based on a first sequence, and the first sequence is one of: a first key stream calculated based on the first shared key; a first Hash sequence calculated based on the first shared key; or a first random sequence calculated based on the first shared key.

18. The method of claim 16 or 17, wherein the first shared key is one of:
a first security key being one of: a first access stratum (AS) key, a first AS security base key, or a first physical layer key; or
being calculated based on the first security key.

19. The method of claim 16 or 17, wherein the first shared key is calculated based on a second key between the first sending device and a core network device.

20. The method of claim 16 or 17, wherein the first shared key is configured.

21. The method of claim 14 or 15, wherein the first shared parameter comprises a first sequence generation parameter.

22. The method of claim 21, wherein the first phase adjustment parameter is calculated based on a first sequence, and the first sequence is calculated based on the first sequence generation parameter.

23. The method of any one of claims 14 to 15, 20 to 22, wherein the plurality of sending devices are a plurality of access network devices, and the receiving device is a terminal.

24. The method of any one of claims 14 to 22, wherein the plurality of sending devices are a plurality of terminals, and the receiving device is an access network device.

25. A receiving device, comprising:
a first communication unit configured to receive echo signals of a plurality of sensing signals, wherein the plurality of sensing signals are generated by a plurality of sending devices based on a plurality of phase adjustment parameters and modulation symbols of the plurality of sensing signals, the plurality of phase adjustment parameters are calculated based on a plurality of shared parameters, and different shared parameters among the plurality of shared parameters are shared between the receiving device and different sending devices.

26. The receiving device of claim 25, further comprising:
a first processing unit configured to obtain a sensing result based on the plurality of phase adjustment parameters and the echo signals of the plurality of sensing signals.

27. The receiving device of claim 26, wherein the first processing unit is configured to:
demodulate the echo signals of the plurality of sensing signals based on each phase adjustment parameter among the plurality of phase adjustment parameters and a modulation symbol of each sensing signal, to obtain a channel estimate between each sending device and the receiving device; and obtain the sensing result based on the channel estimate between each sending device and the receiving device.

28. The receiving device of any one of claims 25 to 27, wherein the plurality of shared parameters comprise a plurality of shared keys, and different shared keys among the plurality of shared keys are shared between the receiving device and different sending devices.

29. The receiving device of claim 28, wherein the plurality of phase adjustment parameters are calculated based on a plurality of sequences, and the plurality of sequences are one of: a plurality of key streams calculated based on the plurality of shared keys; a plurality of Hash sequences calculated based on the plurality of shared keys; or a plurality of random sequences calculated based on the plurality of shared keys.

30. The receiving device of claim 28 or 29, wherein the plurality of shared keys are one of:
a plurality of security keys, wherein different security keys are one of the following between the receiving device and different sending devices: an access stratum (AS) key, an AS security base key, or a physical layer key; or being calculated based on the plurality of security keys.

31. The receiving device of claim 28 or 29, wherein the plurality of shared keys are calculated based on a first key between the receiving device and a core network device.

32. The receiving device of claim 31, wherein the plurality of shared keys are calculated based on the first key and a plurality of first parameters, and different first parameters among the plurality of first parameters comprise identifiers of different sending devices.

33. The receiving device of claim 28 or 29, wherein the plurality of shared keys are configured.

34. The receiving device of any one of claims 25 to 27, wherein the plurality of shared parameters comprise a plurality of sequence generation parameters, and different sequence generation parameters among the plurality of sequence generation parameters are shared between different sending devices and the receiving device.

35. The receiving device of claim 34, wherein the plurality of phase adjustment parameters are calculated based on a plurality of sequences, and the plurality of sequences are calculated based on the plurality of sequence generation parameters.

36. The receiving device of any one of claims 25 to 35, wherein the plurality of sending devices are a plurality of access network devices, and the receiving device is a terminal.

37. The receiving device of any one of claims 25 to 30, 33 to 35, wherein the plurality of sending devices are a plurality of terminals, and the receiving device is an access network device.

38. A first sending device, comprising:
a second communication unit configured to sent a first sensing signal, wherein the first sensing signal is generated based on a first phase adjustment parameter and a modulation symbol corresponding to the first sensing signal, the first phase adjustment parameter is calculated based on a first shared parameter, and the first shared parameter is shared between the first sending device and a receiving device.

39. The first sending device of claim 38, wherein the first sensing signal is one of a plurality of sensing signals, different sensing signals among the plurality of sensing signals are sent by different sending devices, and time domain ranges for sending the plurality of sensing signals are the same.

40. The first sending device of claim 38 or 39, wherein the first shared parameter comprises a first shared key.

41. The first sending device of claim 40, wherein the first phase adjustment parameter is calculated based on a first sequence, and the first sequence is one of: a first key stream calculated based on the first shared key; a first Hash sequence calculated based on the first shared key; or a first random sequence calculated based on the first shared key.

42. The first sending device of claim 40 or 41, wherein the first shared key is one of:
a first security key being one of: a first access stratum (AS) key, a first AS security base key, or a first physical layer key; or being calculated based on the first security key.

43. The first sending device of claim 40 or 41, wherein the first shared key is calculated based on a second key between the first sending device and a core network device.

44. The first sending device of claim 40 or 41, wherein the first shared key is configured.

45. The first sending device of claim 38 or 39, wherein the first shared parameter comprises a first sequence generation parameter.

46. The first sending device of claim 45, wherein the first phase adjustment parameter is calculated based on a first sequence, and the first sequence is calculated based on the first sequence generation parameter.

47. The first sending device of any one of claims 38 to 39, 44 to 46, wherein the plurality of sending devices are a plurality of access network devices, and the receiving device is a terminal.

48. The first sending device of any one of claims 38 to 46, wherein the plurality of sending devices are a plurality of terminals, and the receiving device is an access network device.
